# EUROPEAN PATENT APPLICATION

(11) **EP 4 134 409 A1**
(43) Date of publication of application: **15.02.2023**
(21) Application number: 21796981.5
(22) Date of filing: 29.04.2021
(51) Int. Cl.: C09J 7/25, C09J 7/29

(54) **PROTECTIVE FILM, PROTECTIVE FILM ASSEMBLY, DISPLAY SCREEN ASSEMBLY, AND TERMINAL**

(30) Priority: 30.04.2020 CN 202010365596
(71) Applicant: Huawei Technologies Co., Ltd., Longgang District, Shenzhen, Guangdong 518129 (CN)
(72) Inventor: PANG, Huan, Shenzhen, Guangdong 518129 (CN); HU, Chengwen, Shenzhen, Guangdong 518129 (CN); TAN, Junyan, Shenzhen, Guangdong 518129 (CN); ZHOU, Yujia, Shenzhen, Guangdong 518129 (CN); LI, Yin, Shenzhen, Guangdong 518129 (CN); HUANG, Yihong, Shenzhen, Guangdong 518129 (CN)
(74) Representative: Pfenning, Meinig & Partner mbB
(86) International application number: PCT/CN2021/090871
(87) International publication number: WO 2021/219062

(57) **Abstract**

This application provides a protective film, including an adhesive layer and a base film layer that are stacked. The adhesive layer is adhered to a foldable display. The base film layer includes one or more layers of high-modulus base films and one or more layers of low-modulus base films. An elastic modulus of the high-modulus base film is greater than an elastic modulus of the low-modulus base film. The high-modulus base films and the low-modulus base films are alternately stacked. A surface layer that is in the base film layer and that is away from the adhesive layer is the high-modulus base film. The protective film in this application may be firmly attached to the foldable display, does not rebound and warp when the display is bent for a plurality of times, and comprehensively and effectively protects the foldable display. This application further provides a protective film assembly including the protective film, a display assembly, and a terminal.

## Description

This application claims priority to Chinese Patent Application No. 202010365596.0, filed with China National Intellectual Property Administration on April 30, 2020 and entitled "PROTECTIVE FILM, PROTECTIVE FILM ASSEMBLY, DISPLAY ASSEMBLY, AND TERMINAL", which is incorporated herein by reference in its entirety.

### TECHNICAL FIELD

This application relates to the field of terminal technologies, and in particular, to a protective film, a protective film assembly, a display assembly, and a terminal.

### BACKGROUND

As terminals such as mobile phones are widely used, protective requirements for the terminals are increasingly high. A protective layer is usually attached to a display of the terminal to prevent the display from being damaged and contaminated. However, during use of a foldable terminal, a conventional protective film may rebound and warp due to being bent for a plurality of times, and consequently cannot comprehensively and effectively protect the display.

### SUMMARY

This application provides a protective film. The protective film is firmly attached to a foldable display, so as to prevent the protective film from rebounding and warping due to being bent for a plurality of times, and comprehensively and effectively protect the foldable display.

This application further provides a protective film assembly, a display assembly, and a terminal.

The protective film in this application includes an adhesive layer and a base film layer that are stacked. The adhesive layer is adhered to a foldable display. The base film layer includes one or more layers of high-modulus base films and one or more layers of low-modulus base films. An elastic modulus of the high-modulus base film is greater than an elastic modulus of the low-modulus base film. The high-modulus base films and the low-modulus base films are alternately stacked. A surface layer that is in the base film layer and that is away from the adhesive layer is the high-modulus base film.

In the protective film in this application, the base film layer uses a structure in which the high-modulus base films and the low-modulus base films are alternately stacked. The high-modulus base film can ensure mechanical properties of the base film layer and relatively high pencil hardness, so that the protective film is not easily scratched during use, mechanical properties of the protective film are ensured, and use reliability of the protective film is improved. The low-modulus base film can reduce rebound stress of the protective film caused by deformation in a folding process, to prevent the protective film from rebounding and warping in a folding process of the display, and comprehensively and effectively protect the display. In addition, the low-modulus base film can improve impact resistance of the protective film.

In an implementation, the elastic modulus of the high-modulus base film is greater than 2 GPa, and the elastic modulus of the low-modulus base film is less than 300 MPa, so as to ensure that the base film layer can prevent the protective film from rebounding and warping due to being bent for a plurality of times, and comprehensively and effectively protect the foldable display.

In an implementation, a material of the high-modulus base film includes a polymer optical polyester material or colorless polyimide, to ensure that the high-modulus base film has a relatively high elastic modulus, and the base film layer has better mechanical properties and higher pencil hardness, so that the protective film is not easily scratched during use, mechanical properties of the protective film are ensured, and the use reliability of the protective film is improved. A material of the low-modulus base film includes acrylic adhesive, polyurethane, or polyurethane acrylate, so as to ensure that the low-modulus base film has a relatively low elastic modulus, and can reduce rebound stress of the protective film caused by deformation in a folding process.

In an implementation, transmittance of light with a wavelength of 500 nm on the base film layer is greater than or equal to 90%. Because 550 nm is an average wavelength of visible light and is a wavelength most sensitive to human eyes, the transmittance of light with a wavelength of 500 nm on the base film layer is greater than or equal to 90%, that is, visible light can completely pass through the base film layer. This ensures that the base film layer has a relatively high transmittance. When the protective film is adhered to the display, impact of the protective film on a display image of the display can be reduced, and optical performance of the protective film is ensured.

In an implementation, the protective film further includes an anti-reflective layer. The anti-reflective layer includes one or more high refractive index layers and one or more low refractive index layers. A refractive index of the high refractive index layer is greater than a refractive index of the low refractive index layer. The high refractive index layers and the low refractive index layers are alternately stacked. A surface layer that is in the anti-reflective layer and that is away from the adhesive layer is the low refractive index layer.

In this implementation, the anti-reflective layer can improve transmittance of light on a surface of the protective film, reduce reflectivity of light on the surface of the protective film, ensure an anti-reflective effect of the protective film, reduce impact of the protective film assembly on display definition of the display, and improve user experience.

In an implementation, at least one of the low refractive index layer and the high refractive index layer is doped with an anti-static component, so that the anti-reflective layer has anti-static performance, reduces surface resistance of the protective film, prevents static electricity from generating, ensures anti-static performance of the protective film, avoids adsorption of dust and impurities on the surface of the protective film, and improves display quality of the display when the protective film is adhered to the display.

In an implementation, the high refractive index layer includes a resin layer and metal oxide particles doped in the resin layer. A material of the resin layer of the high refractive index layer includes an acrylate material, a polyurethane acrylate material, a silane modified acrylate material, or a silane modified polyurethane acrylate material. A refractive index of the metal oxide particle is greater than 1.6.

The high refractive index layer doped with the anti-static component further includes an anti-static component doped in the resin layer of the high refractive index layer. The anti-static component is an anti-static agent.

In this implementation, the high refractive index layer is formed by using a coating process. The high refractive index layer doped with the anti-static agent enables the anti-reflective layer to have anti-static performance, to ensure anti-static performance of the protective film, avoid adsorption of dust and impurities on the surface of the protective film, and improve display quality of the display when the protective film is adhered to the display.

In an implementation, the high refractive index layer includes an inorganic film layer. A material of the inorganic film layer includes inorganic metal oxide, nitride, or oxynitride. A refractive index of the inorganic film layer is greater than 1.6.

The high refractive index layer doped with the anti-static component further includes an anti-static component doped in the inorganic film layer. The anti-static component is metal oxide.

In this implementation, the high refractive index layer is formed in a magnetron sputtering manner. The high refractive index layer doped with metal oxide enables the anti-reflective layer to have anti-static performance, to ensure anti-static performance of the protective film, avoid adsorption of dust and impurities on the surface of the protective film, and improve display quality of the display when the protective film is adhered to the display.

In an implementation, the low refractive index layer includes a resin layer and oxide particles or fluoride particles doped in the resin layer. A material of the resin layer of the low refractive index layer includes an acrylate material, a polyurethane acrylate material, a silane modified acrylate material, or a silane modified polyurethane acrylate material. A refractive index of the oxide particle or the fluoride particle is less than 1.5.

The low refractive index layer doped with the anti-static component further includes an anti-static component doped in the resin layer of the low refractive index layer. The anti-static component is an anti-static agent.

In this implementation, the low refractive index layer is formed by using the coating process. The low refractive index layer doped with the anti-static agent enables the anti-reflective layer to have anti-static performance, to ensure the anti-static performance of the protective film, avoid adsorption of dust and impurities on the surface of the protective film, and improve the display quality of the display when the protective film is adhered to the display.

In addition, compared with a case in which the high refractive index layer is doped with the anti-static agent, because the low refractive index layer is closer to an outer side of the protective film, that is, the anti-static agent in the low refractive index layer is closer to the outer side of the protective film, an anti-static capability of the anti-reflective layer is enhanced. This helps improve the anti-static performance of the protective film.

In an implementation, a difference between the refractive index of the low refractive index layer and the refractive index of the high refractive index layer is greater than 0.1, so as to ensure an anti-reflective effect of the anti-reflective layer, and implement anti-reflection of the protective film on light.

In an implementation, the protective film further includes a hard coating layer. The hard coating layer is located on a side that is of the base film layer and that is away from the adhesive layer. The hard coating layer is located between the base film layer and the anti-reflective layer. The hard coating layer includes a resin layer. A material of the resin layer of the hard coating layer includes an acrylate material, a polyurethane acrylate material, a silane modified acrylate material, or a silane modified polyurethane acrylate material, so as to improves surface energy of the hard coating layer, so that the hard coating layer not only can be better attached to a surface of the base film layer, but also can be used as a base layer that is of the anti-reflective layer and that is formed on the surface of the base film layer, to enhance adhesion of the anti-reflective layer on the surface of the base film layer, avoid a case in which the anti-reflective layer is prone to lift off from the base film layer, and improve the use reliability of the protective film. In addition, hardness of the hard coating layer is relatively high, and can provide mechanical support for the anti-reflective layer, to ensure wear resistance of the protective film.

In an implementation, the hard coating layer further includes an anti-static agent doped in the resin layer of the hard coating layer, so as to enhance an anti-static capability of the hard coating layer, improve the anti-static performance of the protective film, reduce the surface resistance of the protective film, and prevent the static electricity from generating.

In an implementation, the protective film further includes an anti-static layer. The anti-static layer is located between the adhesive layer and the base film layer. A material of the anti-static layer includes an anti-static agent, so as to improve the anti-static performance of the protective film, reduce the surface resistance of the protective film, and prevent the static electricity from generating.

In an implementation, the anti-static layer is located on the side that is of the base film layer and that is away from the adhesive layer. The anti-static layer is located between the base film layer and the hard coating layer, or the anti-static layer is located between the hard coating layer and the anti-reflective layer. Compared with a case in which the anti-static layer is located between the base film layer and the adhesive layer, the anti-static layer is closer to the outer side of the protective film. This helps improve the anti-static performance of the protective film.

In an implementation, a material of the adhesive layer includes acrylic adhesive, an elastic modulus of the adhesive layer is less than 40 KPa, and a glass transition temperature is less than -30°C. In other words, the adhesive layer has an ultra-low elastic modulus and relatively high rebound resilience, so that the protective film has bendable performance. When the protective film undergoes plastic deformation as the foldable display is bent and stretched, the adhesive layer may absorb the plastic deformation of the protective film, to prevent the protective film from rebounding and arching in a process in which the protective film is bent along with the display, so that the protective film can always be attached to a display surface of the display to protect the display.

In an implementation, the protective film further includes an anti-fingerprint layer. The anti-fingerprint layer is located on the side that is of the base film layer and that is away from the adhesive layer. Specifically, the anti-fingerprint layer is located on a side that is of the anti-reflective layer and that is away from the adhesive layer. In other words, the anti-fingerprint layer is a layer structure of an uppermost layer of the anti-fingerprint layer, and can provide anti-fingerprint performance for the protective film. A material of the anti-fingerprint layer includes perfluoropolyether silane, fluoroether, or fluorocarbon silane, so that the anti-fingerprint layer further has scratch resistance and high hardness performance, to ensure that the protective film is not easily scratched during use. In addition, a coefficient of kinetic friction of the anti-fingerprint layer is relatively small, and a friction force when the user slides on the surface of the protective film is relatively small, that is, the user relatively smoothly slides on the surface of the protective film. This helps improve use experience of the user.

In an implementation, the protective film further includes a base layer. The base layer is located between the anti-fingerprint layer and the base film layer. Specifically, the base layer is located between the anti-fingerprint layer and the anti-reflective layer. A material of the base layer includes organic silane or inorganic silica.

In this implementation, the base layer may enhance adhesion between the anti-fingerprint layer and the anti-reflective layer, avoid a case in which the anti-reflective layer lifts off from the base film layer in a use process of the protective film, and improve the use reliability of the protective film.

The protective film assembly in this application includes any one of the foregoing protective films, a first release film, and a second release film. The first release film covers an inner surface of the protective film, and the second release film covers an outer surface of the protective film.

The protective film assembly in this application includes any one of the foregoing protective films. When the protective film is attached to a foldable display, the protective film does not rebound and warp when the display is folded, to comprehensively and effectively protect the foldable display.

The display assembly in this application includes a foldable display and any one of the foregoing protective films. An adhesive layer of the protective film is adhered to the display.

The display assembly in this application is attached to the foldable display by using any one of the foregoing protective films. The protective film does not rebound and warp when the display is folded, to comprehensively and effectively protect the foldable display. This helps prolong a service life of the display assembly.

The terminal in this application includes a housing and the foregoing display assembly. The display assembly is mounted on the housing.

The terminal in this application is attached to a foldable display by using any one of the foregoing protective films. The protective film does not rebound and warp when the display is folded, to comprehensively and effectively protect the foldable display. This helps prolong a service life of the terminal.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a structure of a terminal according to an embodiment of this application;
FIG. 2 is a schematic diagram of a structure of the terminal shown in FIG. 1 in another state;
FIG. 3 is a schematic diagram of a structure of a display assembly in the terminal shown in FIG. 1;
FIG. 4 is a schematic diagram of an exploded structure of the display assembly shown in FIG. 3;
FIG. 5 is a schematic diagram of a cross-sectional structure of a protective film in the display assembly shown in FIG. 4 sectioned in an I-I direction in an implementation;
FIG. 6 is a schematic diagram of a cross-sectional structure of a protective film in the display assembly shown in FIG. 4 sectioned in an I-I direction in a second implementation;
FIG. 7 is a schematic diagram of a cross-sectional structure of a protective film in the display assembly shown in FIG. 4 sectioned in an I-I direction in a third implementation;
FIG. 8 is a schematic diagram of a cross-sectional structure of a protective film in the display assembly shown in FIG. 4 sectioned in an I-I direction in a fourth implementation;
FIG. 9 is a schematic diagram of a cross-sectional structure of a protective film in the display assembly shown in FIG. 4 sectioned in an I-I direction in a fifth implementation;
FIG. 10 is a schematic diagram of a cross-sectional structure of a protective film in the display assembly shown in FIG. 4 sectioned in an I-I direction in a sixth implementation;
FIG. 11 is a schematic diagram of a cross-sectional structure of a protective film in the display assembly shown in FIG. 4 sectioned in an I-I direction in a seventh implementation;
FIG. 12 is a schematic diagram of a cross-sectional structure of a protective film in the display assembly shown in FIG. 4 sectioned in an I-I direction in an eighth implementation;
FIG. 13 is a schematic diagram of a cross-sectional structure of a protective film in a display assembly of a second terminal sectioned in an I-I direction in an implementation according to an embodiment of this application;
FIG. 14 is a schematic diagram of a cross-sectional structure of a protective film in a display assembly of a second terminal sectioned in an I-I direction in a second implementation according to an embodiment of this application;
FIG. 15 is a schematic diagram of a cross-sectional structure of a protective film in a display assembly of a second terminal sectioned in an I-I direction in a third implementation according to an embodiment of this application;
FIG. 16 is a schematic diagram of a cross-sectional structure of a protective film in a display assembly of a second terminal sectioned in an I-I direction in a fourth implementation according to an embodiment of this application;
FIG. 17 is a schematic diagram of a cross-sectional structure of a protective film in a display assembly of a third terminal sectioned in an I-I direction according to an embodiment of this application;
FIG. 18 is a schematic diagram of a structure of a protective film assembly according to an embodiment of this application;
FIG. 19 is a schematic diagram of a cross-sectional structure of the protective film assembly shown in FIG. 18 sectioned in an II-II direction;
FIG. 20 is a process flowchart of a protective film preparation method according to an embodiment of this application;
FIG. 21 is a schematic diagram of a structure in which a hard coating layer is formed in the protective film preparation method shown in FIG. 20;
FIG. 22 is a schematic diagram of a structure in which an anti-reflective layer is formed in the protective film preparation method shown in FIG. 20; and
FIG. 23 is a schematic diagram of a structure in which an adhesive layer is formed in the protective film preparation method shown in FIG. 20.

### DESCRIPTION OF EMBODIMENTS

The following describes embodiments of this application with reference to the accompanying drawings in embodiments of this application.

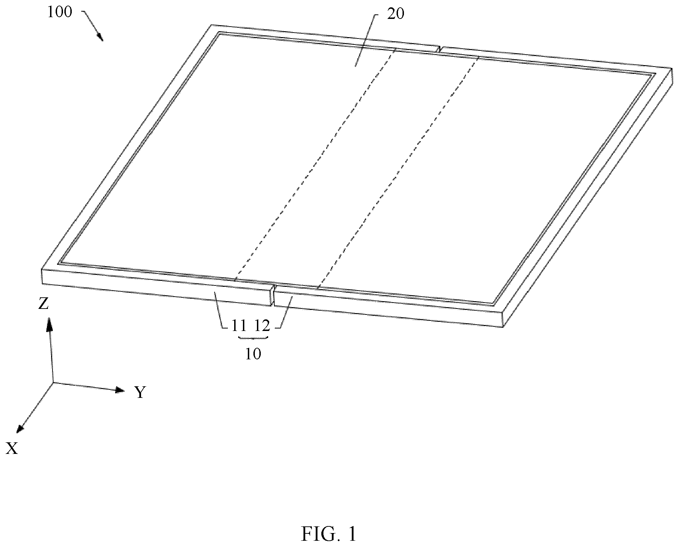

FIG. 1 is a schematic diagram of a structure of a terminal 100 according to an embodiment of this application.

The terminal 100 includes but is not limited to an electronic device having a display function, for example, a mobile phone, a tablet computer, a personal computer, a multimedia player, an e-book reader, a notebook computer, a vehicle-mounted device, or a wearable device. An example in which the terminal 100 is a mobile phone is used for specific description in FIG. 1. For ease of description, a width direction of the terminal 100 is defined as an X-axis direction, a length direction of the terminal 100 is defined as a Y-axis direction, and a thickness direction of the terminal 100 is defined as a Z-axis direction. The X-axis direction, the Y-axis direction, and the Z-axis direction are perpendicular to each other.

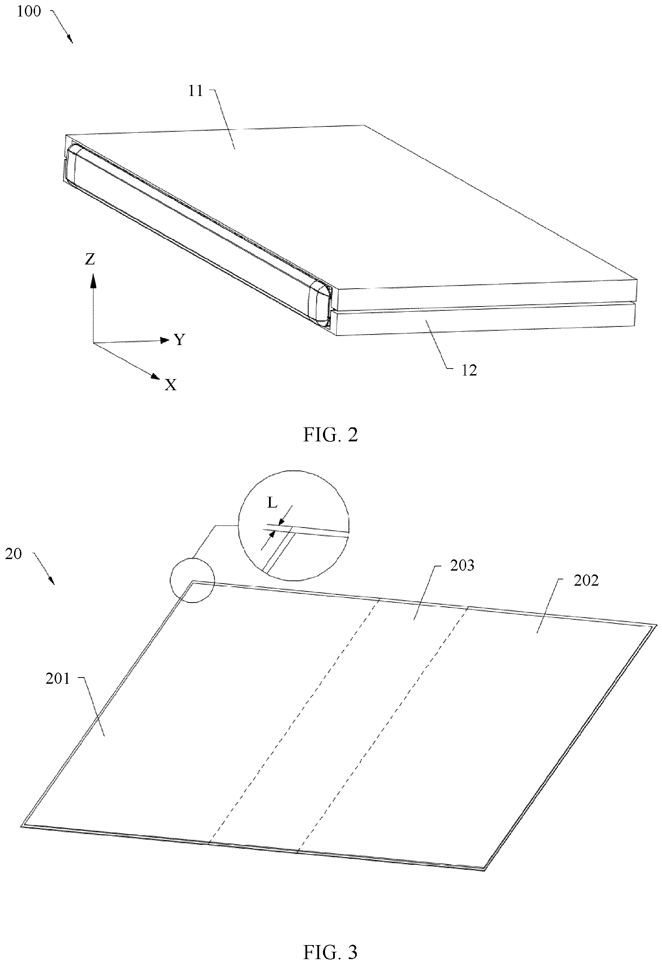

FIG. 2 is a schematic diagram of a structure of the terminal 100 shown in FIG. 1 in another state.

In this embodiment, the terminal 100 is a foldable mobile phone. In other words, the terminal 100 is a mobile phone that can switch between a folded state and an unfolded state. The terminal 100 shown in FIG. 1 is in an unfolded state, and the terminal 100 shown in FIG. 2 is in a folded state. In this application, an example in which the terminal 100 may be folded or unfolded along the X-axis direction is used for description.

It should be noted that the terminal 100 in this embodiment is an electronic device that may be folded once. In another embodiment, the terminal 100 may alternatively be an electronic device that may be folded for a plurality of times (two or more times). In this case, the terminal 100 may have a plurality of parts. Every two parts may be relatively close to each other until the terminal 100 is in the folded state, or every two parts may be relatively far away from each other until the terminal 100 is in the unfolded state.

The terminal 100 includes a housing 10 and a display assembly 20. The display assembly 20 is mounted on the housing 10. The housing 10 includes a first housing 11, a second housing 12, and a connection mechanism (not shown in the figure) connected between the first housing 11 and the second housing 12. In this embodiment, the connecting mechanism is a rotating shaft mechanism extending along the X-axis direction. The first housing 11 is rotatably connected to the second housing 12 by using the connecting mechanism. That is, the first housing 11 and the second housing 12 are connected to each other by using the connection mechanism, and may rotate relative to each other in the X-axis direction. Specifically, the first housing 11 and the second housing 12 may rotate relative to each other to be close to each other, so that the housing 10 is in the folded state, as shown in FIG. 2. The first housing 11 and the second housing 12 may also rotate relative to each other to be far away from each other, so that the housing 10 is in the unfolded state, as shown in FIG. 1. In other words, the first housing 11 and the second housing 12 may rotate relative to each other, so that the housing 10 may switch between the folded state and the unfolded state.

It should be understood that, in another embodiment, the connection mechanism may alternatively be a sliding mechanism, a rotating and sliding composite mechanism, a detachable fastening mechanism, or the like. This is not specifically limited in this application.

FIG. 3 is a schematic diagram of a structure of the display assembly 20 in the terminal 100 shown in FIG. 1.

The display assembly 20 is configured to display information about a text, an image, a video, or the like. In this embodiment, the display assembly 20 includes a first part 201, a second part 202, and a third part 203 connected between the first part 201 and the second part 202. The first part 201, the second part 202, and the third part 203 are located on a same side of the housing 10, and the first part 201, the third part 203, and the second part 202 are sequentially arranged in the Y-axis direction. Specifically, the first part 201 is mounted on the first housing 11, the second part 202 is mounted on the second housing 12, and the third part 203 is located between the first housing 11 and the second housing 12. The third part 203 can be bent in the X-axis direction.

When the terminal 100 is in the unfolded state, the display assembly 20 is in the unfolded state, and an angle between the first part 201, the second part 202, and the third part 203 is 180 degrees (or may be approximately 180 degrees, that is, a slight deviation is allowed). In this case, the terminal 100 has a large continuous display area, so that large-screen display can be implemented, and user experience is improved. When the terminal 100 is in the folded state, the display assembly 20 is in the folded state, the first part 201 overlaps the second part 202, and the third part 203 is bent. In this case, an exposed area of the display assembly 20 is relatively small, so that a probability of the display assembly 20 to be damaged is reduced.

It should be noted that when the terminal 100 in this embodiment is in the folded state shown in FIG. 2, the display assembly 20 is in an inward-folded state. In this case, the display assembly 20 is located between the first housing 11 and the second housing 12. In another embodiment, when the terminal 100 is in the folded state, the display assembly 20 may alternatively be in an outward-folded state. In this case, the first housing 11 and the second housing 12 are located between the first part 201 and the second part 202.

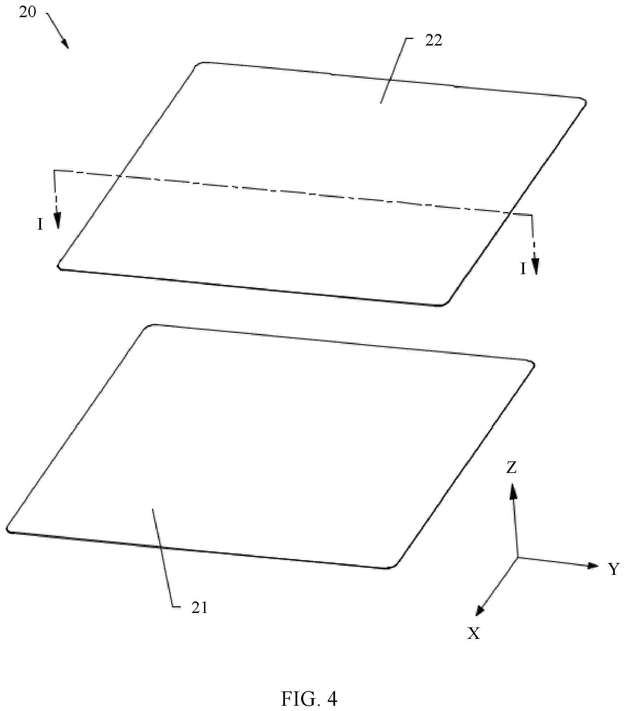

FIG. 4 is a schematic diagram of an exploded structure of the display assembly 20 shown in FIG. 3.

The display assembly 20 includes a display 21 and a protective film 22. The display 21 is mounted on the housing 10, and the protective film 22 is attached to the display 21. In this embodiment, the display 21 is a foldable display. The display 21 includes a display surface 211 that is away from the housing 10. The display surface 211 is configured to display information about a text, an image, a video, or the like. The display 21 may integrate a display function, a touch-sensitive function, and a fingerprint image capturing function. It should be understood that the display 21 in this embodiment is not limited to a 2D display shown in FIG. 3, and may be a 2.5D display or a 3D display.

In an implementation, an optical under-display fingerprint sensor is disposed on the display 21. The display 21 includes a display panel, a polarizer, and a protective cover that are sequentially stacked. That is, the polarizer is located between the display panel and the protective cover. Specifically, the display panel is configured to display information about a text, an image, a video, or the like. The polarizer is mounted on the display surface 211 of the display panel. The protective cover is mounted on a surface that is of the polarizer and that is away from the display panel, to protect the polarizer and the display panel. The protective cover may be made of a transparent material such as glass, to avoid affecting display of the display panel.

The protective film 22 is attached to the display surface 211 of the display 21. In this embodiment, a size and a shape of the protective film 22 adapt to a size and a shape of the display surface 211. The protective film 22 is completely attached to the display surface 211, and an edge of the protective film 22 is aligned with an edge of the display 21. Specifically, a distance L between the edge of the protective film 22 and the edge of the display 21 is 1.0 mm, so as to ensure that the protective film 22 is well attached to the display surface 211, and the protective film 22 is not prone to crimp. The protective film 22 is always completely attached to the display 21 without shrinking and warping. This ensures that the protective film 22 comprehensively protects the display 21, prevents the display 21 from cracking due to falling of the terminal 100, reduces user losses, and improves user experience.

It should be noted that, when function holes such as a camera hole or an indicator hole are disposed on the display 21, through holes that avoid these function holes may be further disposed on the protective film 22, so that these function holes are exposed on the protective film 22. This ensures normal use of these function holes.

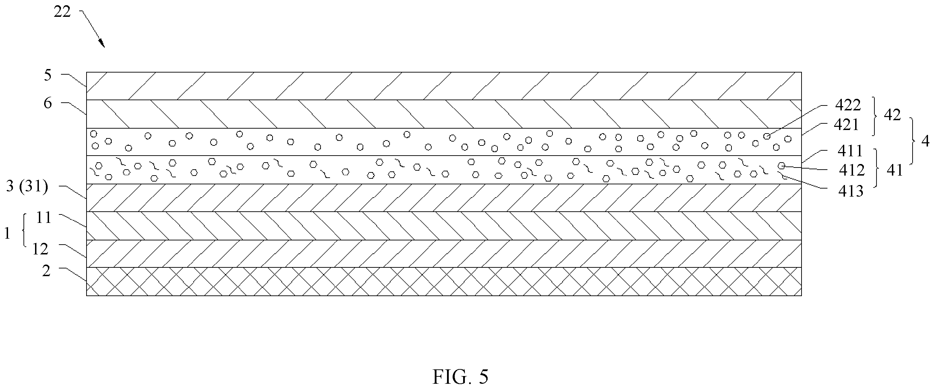

FIG. 5 is a schematic diagram of a cross-sectional structure of the protective film 22 in the display assembly 20 shown in FIG. 4 sectioned in an I-I direction in an implementation. It should be noted that, in the accompanying drawings of this application, "sectioned along an I-I direction" means being sectioned along a plane on which line I-I and arrows at both ends of line I-I are located. The following description of the accompanying drawings is understood in a same way.

The protective film 22 includes a base film layer 1, an adhesive layer 2, a hard coating (hard coating, HC) layer 3, an anti-reflective (anti-reflective, AR) layer 4, and an anti-fingerprint (anti-fingerprint, AF) layer 5. Specifically, the adhesive layer 2 is located on a side of the base film layer 1, and is adhered to the display 21. The hard coating layer 3, the anti-reflective layer 4, and the anti-fingerprint layer 5 are located on a side that is of the base film layer 1 and that is away from the adhesive layer 2. To be specific, the hard coating layer 3, the anti-reflective layer 4, and the anti-fingerprint layer 5 are sequentially stacked on the side that is of the base film layer 1 and that is away from the adhesive layer 2. In other words, the adhesive layer 2, the base film layer 1, the hard coating layer 3, the anti-reflective layer 4, and the anti-fingerprint layer 5 are sequentially stacked.

Stacked arrangement means that layer structures are sequentially stacked from inside to outside. In this case, the layer structures may be directly contacted and stacked, or another layer structure may be included. For example, that the adhesive layer 1 and the base film layer 2 are stacked may mean that the base film layer 2 is located on an outer surface of the adhesive layer 1, or may mean that the base film layer 2 is located outside the adhesive layer 1.

It should be understood that orientation terms such as "outer" and "inner" used when the protective film 22 is described in this embodiment of this application are mainly described based on a presentation orientation of the protective film 22 in FIG. 4, and do not constitute a limitation on an orientation of the protective film 22 in an actual application scenario.

In this embodiment, the base film layer 1 includes one or a plurality of layers of high-modulus base films 11 and one or a plurality of layers of low-modulus base films 12. An elastic modulus of the high-modulus base film 12 is greater than an elastic modulus of the low-modulus base film 12. The high-modulus base films 11 and the low-modulus base films 12 are alternately stacked. A surface layer that is in the base film layer 1 and that is away from the adhesive layer 2 is the high-modulus base film 11. That is, an outermost layer of the base film layer 1 is the high-modulus base film 11.

In an implementation, the base film layer 1 includes a layer of the high-modulus base film 11 and a layer of the low-modulus base film 12. The low-modulus base film 12 and the high-modulus base film 11 are sequentially stacked. The elastic modulus of the high-modulus base film 11 is greater than 3 GPa, to ensure that the high-modulus base film 11 has a relatively high elastic modulus, and the base film layer 1 has better mechanical properties and higher pencil hardness, so that the protective film 22 is not easily scratched during use, mechanical properties of the protective film 22 are ensured, and reliability of the protective film 22 is improved.

In this embodiment, a material of the high-modulus base film 11 includes a polymer optical polyester material or colorless polyimide (colorless polyimide, CPI). Specifically, a material of the base film layer 1 includes a polymer optical polyester material. The polymer optical polyester material included in the base film layer 1 is polyethylene terephthalate (polyethylene terephthalate, PET). That is, the base film layer 1 is of a thin film-like structure made of PET. A thickness of the high-modulus base film 11 ranges from 50 µm to 80 µm. It should be noted that, in another embodiment, the thickness of the high-modulus base film 11 may alternatively range from 38 µm to 100 µm. This is not specifically limited in this application.

The elastic modulus of the low-modulus base film 12 is less than 300 MPa, so as to ensure that the low-modulus base film 12 has a relatively low elastic modulus. When the display assembly 20 is folded, the low-modulus base film 12 not only can reduce rebound stress of the protective film 12 caused by deformation in a folding process, prevent the protective film 22 from rebounding and warping in a folding process of the display assembly 20, and comprehensively and effectively protect the display 21, but also can improve impact resistance of the protective film 22. Specifically, a material of the low-modulus base film 12 includes polyurethane (polyurethane, PU) or polyurethane acrylate (polyurethane acrylate, PUA). A thickness of the low-modulus base film 12 ranges from 25 µm to 50 µm. In another embodiment, the thickness of the low-modulus base film 12 may alternatively range from 10 µm to 100 µm. This is not specifically limited in this application.

In this embodiment, a refractive index of the base film layer 1 ranges from 1.4 to 1.5. A haze of the base film layer 1 is less than or equal to 1%, and transmittance of light with a wavelength of 550 nm on the base film layer 1 is greater than or equal to 90%. 550 nm is an average wavelength of visible light and is a wavelength most sensitive to human eyes, and the transmittance of light with a wavelength of 550 nm on the base film layer 1 is greater than or equal to 90%, that is, visible light can almost completely pass through the base film layer 1. This ensures that the base film layer 1 has a relatively high transmittance and a relatively low haze, so that impact of the protective film 22 on a display image of the display 21 can be reduced, and optical performance of the protective film 22 is ensured.

In addition, a fast axis direction of the base film layer 1 is parallel to or perpendicular to a polarization direction of the polarizer of the display 21, or there is an angle of 45 degrees between a fast axis direction and a slow axis direction of the base film layer 1 and the polarization direction of the polarizer of the display 21, so as to ensure normal use of an optical under-display fingerprint sensor in the display 21.

The hard coating layer 3 is stacked on a surface that is of the base film layer 1 and that is away from the display 21, and is located between the base film layer 1 and the anti-reflective layer 4. In this implementation, the hard coating layer 3 is formed, by using a coating process, on the surface that is of the base film layer 1 and that is away from the display 21. A thickness of the hard coating layer 3 ranges from 0.1 µm to 3 µm. In addition, surface energy of the hard coating layer 3 is greater than 32 dynes (g^{∗}cm/s²). That is, the hard coating layer 3 has relatively high surface energy.

Specifically, the hard coating layer 3 includes a resin layer 31. A material of the resin layer 31 includes an acrylate material, a PUA material, a silane modified acrylate material, or a silane modified PUA material. In this implementation, the material of the resin layer 31 includes the acrylate material. The acrylate material included in the resin layer 31 is acrylic resin. It should be noted that, in another implementation, the acrylate material included in the resin layer 31 may not be acrylic resin, but may be another acrylate material other than the acrylic resin.

Because the surface energy of the hard coating layer 3 is relatively high, the hard coating layer 3 not only can be better attached to the surface of the base film layer 1, but also can be used as a base layer that is of the anti-reflective layer 4 and that is formed on the surface of the base film layer 1, to enhance adhesion of the anti-reflective layer 4 on the surface of the base film layer 1, avoid a case in which the anti-reflective layer 4 is prone to lift off from the base film layer 1, and improve use reliability of the protective film 22. In addition, hardness of the hard coating layer 3 made of the acrylic resin is also relatively high, and can further provide mechanical support for the anti-fingerprint layer 5 and the anti-reflective layer 4 that is located outside the hard coating layer 3, to ensure wear resistance of the protective film 22.

The anti-reflective layer 4 is located on a side that is of the adhesive layer 2 and that is away from the display 21. Specifically, the anti-reflective layer 4 is stacked on a surface that is of the hard coating layer 3 and that is away from the base film layer 1, to improve transmittance of light on a surface of the protective film 22, reduce reflectivity of light on the surface of the protective film 22, ensure an anti-reflective effect of the protective film 22, improve display definition of the display assembly 20, and improve user experience.

In an implementation, the anti-reflective layer 4 is formed, by using the coating process, on the surface that is of the hard coating layer 3 and that is away from the base film layer 1. A thickness of the anti-reflective layer 4 ranges from 100 nm to 300 nm. Specifically, the anti-reflective layer 4 includes one or a plurality of high refractive index layers 41 and one or a plurality of low refractive index layers 42. The high refractive index layers 41 and the low refractive index layers 42 are alternately stacked, and both the high refractive index layer 41 and the low refractive index layer 42 are formed by using the coating process. A surface layer that is in the anti-reflective layer 4 and that is away from the adhesive layer 2 is the low refractive index layer 42. That is, an outermost layer of the anti-reflective layer 4 is the low refractive index layer 42, so as to ensure that the anti-reflective layer 4 can implement anti-reflection on light.

At least one of the low refractive index layer 42 and the high refractive index layer 41 is doped with an anti-static (anti-static, AS) component, so that the anti-reflective layer 4 further has anti-static performance, which can reduce surface resistance of the protective film 22, prevent static electricity from generating, ensure anti-static performance of the protective film 22, avoid adsorption of dust and impurities on the surface of the protective film 22, and improve display quality of the display 21.

Specifically, the anti-reflective layer 4 includes one high refractive index layer 41 and one low refractive index layer 42, and the high refractive index layer 41 and the low refractive index layer 42 are sequentially stacked on the surface that is of the hard coating layer 3 and that is away from the base film layer 1. The high refractive index layer 41 is doped with the anti-static component, so as to enhance an anti-static capability of the anti-reflective layer 4, improve the anti-static performance of the protective film 22, reduce the surface resistance of the protective film 22, prevent the static electricity from generating, and improve the display definition of the display assembly 20.

It should be noted that, in another implementation, the anti-reflective layer 4 may include the plurality of (two or more) high refractive index layers 41 or the plurality of low refractive index layers 42. For example, a total quantity of the high refractive index layers 41 and the low refractive index layers 42 may be from three layers to six layers, so as to ensure an anti-reflective effect of the anti-reflective layer 4, while preventing an excessively large thickness of the protective film 22 from affecting a light and thin design of the terminal 100.

A thickness of the high refractive index layer 41 ranges from 20 nm to 80 nm, and the refractive index of the high refractive index layer 41 ranges from 1.5 to 2.1. Specifically, the high refractive index layer 41 includes a resin layer 411, and metal oxide particles 412 and an anti-static component 413 that are doped in the resin layer 411. A material of the resin layer 411 includes an acrylate material, a PUA material, a silane modified acrylate material, or a silane modified PUA material. In this implementation, the material of the resin layer 411 includes the acrylate material. The acrylate material included in the resin layer 411 is acrylic resin. In this case, the material of the high refractive index layer 41 includes acrylic resin that is the same as the material of the hard coating layer 3. This helps enhance adhesion of the high refractive index layer 41 on a surface of the hard coating layer 3. It should be noted that, in another implementation, the acrylate material included in the resin layer 411 may not be acrylic resin, but may be another acrylate material other than the acrylic resin.

The metal oxide particles 412 are doped in the acrylic resin of the resin layer 411, and a refractive index of the metal oxide particle is greater than 1.6, so as to ensure a high refractive index of the high refractive index layer 41. In this implementation, the metal oxide particles 412 are zirconia particles. Specifically, the zirconia particle is a particle with a nano-scale particle size, and a particle size of the zirconia particle ranges from 10 nm to 50 nm. The zirconia particles are polygonal particles, so as to increase a surface area of the zirconia particle, increase a contact area between the zirconia particle and the acrylic resin, and improve dispersion of the zirconia particles in the acrylic resin.

It should be understood that, in another implementation, the zirconia particles may also be spherical particles or other special-shaped particles. Alternatively, the metal oxide particles 412 may not be zirconia particles, but may be other metal oxide particles. Alternatively, there may be a plurality of types of metal oxide particles 412, provided that a refractive index of the metal oxide particle 412 is greater than 1.6. This is not specifically limited in this application.

The anti-static component 413 and the zirconia particles are jointly doped in the acrylic resin of the resin layer 31. In this implementation, the anti-static component 413 is an anti-static agent. Specifically, the anti-static component 413 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS. It should be noted that the PEDOT:PSS is a substance composed of poly 3,4-ethylenedioxythiophene (poly 3,4-ethylenedioxythiophene, PEDOT) monomer and poly sodium-p-styrenesulfonate (poly sodium-p-styrenesulfonate, PSS).

It should be noted that, in this embodiment, that the anti-static component 413 is doped in the resin layer 411 affects the refractive index of the high refractive index layer 41 to some extent. In this case, the refractive index of the high refractive index layer 41 may be kept between 1.5 and 2.1 by adjusting parameters such as a thickness and a component of the high refractive index layer 41, so as to ensure that the high refractive index layer 41 can cooperate with the low refractive index layer 42 to implement the anti-reflective effect of the anti-reflective layer 4.

The low refractive index layer 42 is stacked on a surface that is of the high refractive index layer 41 and that is away from the hard coating layer 3. A refractive index of the low refractive index layer 42 is less than the refractive index of the high refractive index layer 41. That is, the refractive index of the high refractive index layer 41 is greater than the refractive index of the low refractive index layer 42. Specifically, a difference between the refractive index of the low refractive index layer 42 and the refractive index of the high refractive index layer 41 is greater than 0.1, so as to ensure the anti-reflective effect of the anti-reflective layer 4, and implement anti-reflection of the protective film 22 on light.

The low refractive index layer 42 includes a resin layer 421 and oxide particles or fluoride particles 422 doped in the resin layer 421. A thickness of the low refractive index layer 42 ranges from 10 nm to 100 nm, and the refractive index of the low refractive index layer 42 ranges from 1.2 to 1.6.

In this implementation, a material of the resin layer 421 includes an acrylate material, a PUA material, a silane modified acrylate material, or a silane modified PUA material. In this implementation, the material of the resin layer 421 includes the acrylate material. The acrylate material included in the resin layer 411 is acrylic resin. In this case, the material of the low refractive index layer 42 includes acrylic resin that is the same as the material of the high refractive index layer 41. This helps enhance adhesion of the low refractive index layer 42 on a surface of the high refractive index layer 41. It should be noted that, in another implementation, the acrylate material included in the low refractive index layer 42 may not be acrylic resin, but may be another acrylate material other than the acrylic resin.

The oxide particles or fluoride particles 422 are doped in the acrylic resin of the resin layer 421. A refractive index of the oxide particle or fluoride particle 422 is less than 1.5, so as to ensure that the refractive index of the low refractive index layer 42 ranges from 1.2 to 1.6. In this implementation, the low refractive index layer 42 includes the oxide particles 422. Specifically, the oxide particles 422 are silica particles. The silica particle is a hollow particle with a nano-scale particle size, and a particle size of the silica particle ranges from 10 nm to 50 nm. It should be understood that, in another implementation, the oxide particles 422 may not be silica particles, but may be other oxide particles other than the silica particles. Alternatively, there may be a plurality of types of oxide particles 422, provided that a refractive index of the oxide particle 422 is less than 1.5.

The anti-fingerprint layer 5 is located on a side that is of the anti-reflective layer 4 and that is away from the adhesive layer 2. In this implementation, the anti-fingerprint layer 5 is a layer structure of an uppermost layer of the protective film 22. In other words, the anti-fingerprint layer 5 is a layer structure that is of the protective film 22 and that is away from the display 21, and can provide anti-fingerprint performance for the protective film 22. A material of the anti-fingerprint layer 5 includes perfluoropolyether silane, fluoroether, or fluorocarbon silane. In this implementation, the material of the anti-fingerprint layer 5 includes perfluoropolyether silane. Specifically, the anti-fingerprint layer 5 is formed on a surface of the anti-reflective layer 4 by using a roll to roll (roll to roll, R2R) technology. A thickness of the anti-fingerprint layer 5 ranges from 10 nm to 50 nm, a water contact angle is greater than or equal to 110 degrees, and a diiodomethane contact angle is greater than or equal to 95 degrees.

In the protective film 22 in this implementation, the anti-fingerprint layer 5 is formed by directly evaporating perfluoropolyether silane on the surface of the anti-reflective layer 4. This fully uses a low surface energy feature of perfluoropolyether silane, so that both a water contact angle and an oil contact angle of the anti-fingerprint layer 5 are relatively large. Therefore, anti-fingerprint performance of the anti-fingerprint layer 5 is comparable to that of a glass anti-fingerprint layer. In addition, the anti-fingerprint layer 5 has scratch resistance and high hardness performance, to ensure that the protective film 22 is not easily scratched during use. In addition, a coefficient of kinetic friction of the anti-fingerprint layer 5 is relatively small, and a friction force when the user slides on the surface of the protective film 22 is relatively small, that is, the user relatively smoothly slides on the surface of the protective film 22. This helps improve use experience of the user

When light passes through the protective film 22 and enters the display 21, the light is reflected on an interface between the anti-fingerprint layer 5 and the low refractive index layer 42, an interface between the low refractive index layer 42 and the high refractive index layer 41, and an interface between the high refractive index layer 41 and the hard coating layer 3. A refractive index of the anti-fingerprint layer 5 may be limited to a value less than 1.5, and a thickness of the anti-fingerprint layer 5 may be limited to a range between 10 nm and 30 nm, and the refractive indices and the thicknesses of the high refractive index layer 41 and the low refractive index layer 42 are adjusted by using common simulation software, for example, thin film calculation (thin film calculation, TACal) software. In this way, light intensities of reflected light reflected on the foregoing interfaces are similar, and a phase difference is 180 degrees, so that interference of the reflected light is canceled, and the anti-reflective effect of the protective film 22 is implemented. It should be understood that, because the hard coating layer 3 has relatively little impact on the anti-reflective effect of the anti-reflective layer 4, the anti-reflective effect of the protective film 22 can be implemented provided that a thickness of the hard coating layer 3 is limited to a value less than 1 µm and a refractive index is limited to a range between 1.4 and 1.6.

In addition, the protective film 22 further includes a base layer 6. The base layer 6 is located between the anti-fingerprint layer 5 and the anti-reflective layer 4. The base layer 6 is formed in a process of forming the anti-fingerprint layer 5 by using the R2R technology. The base layer 6 is first formed on the surface of the anti-reflective layer 4, and then the anti-fingerprint layer 5 is formed on a surface of the base layer 6, so as to enhance adhesion between the anti-fingerprint layer 5 and the anti-reflective layer 4, avoid a case in which the anti-fingerprint layer 5 lifts off from the anti-reflective layer 4 in a use process of the protective film 22, and improve the use reliability of the protective film 22.

In this implementation, a material of the base layer 6 includes organic silane. The thickness of the base layer 6 ranges from 10 nm to 30 nm. It should be understood that, in another implementation, the material of the base layer 6 may also include inorganic silica. In this case, the thickness of the base layer 6 ranges from 3 nm to 10 nm.

The adhesive layer 2 is stacked on a surface that is of the base film layer 1 and that is away from the hard coating layer 3. That is, the base film layer 1 is located between the adhesive layer 2 and the hard coating layer 3. In other words, the adhesive layer 2 is stacked on a surface that is of the base film layer 1 and that faces towards the display 21. The adhesive layer 2 is formed on the surface of the base film layer 1 by using the coating process. Specifically, a surface that is of the adhesive layer 2 and that is away from the base film layer 1 is attached to the display surface 211 of the display 21. In this implementation, a material of the adhesive layer 2 includes acrylic adhesive. A thickness of the adhesive layer 2 ranges from 10 µm to 30 µm, and a refractive index of the adhesive layer 2 ranges from 1.3 to 1.4.

The adhesive layer 2 made of the acrylic adhesive can be well attached to the display surface 211 of the display 21, so that when the protective film 22 is attached to the display surface 211 of the display 21, a small bubble is not prone to appear, and related functions such as fingerprint unlocking of the display 21 is not affected. In addition, the acrylic adhesive has high light transmission, so that impact of the protective film 22 on the display image of the display 21 can be reduced, and use experience of the user can be improved.

The adhesive layer 2 can be better adhered to the base film layer 1 made of PET, that is, adhesion of the adhesive layer 2 on the surface of the base film layer 1 is relatively large. Specifically, an elastic modulus of the adhesive layer 2 is less than 40 KPa (at a room temperature of about 25°C), and a glass transition temperature is less than -30°C. In other words, the adhesive layer 2 is made of acrylic adhesive with an ultra-low modulus and high rebound resilience, so that the protective film 22 has bendable performance. When the protective film 22 undergoes plastic deformation as the terminal 100 is bent and stretched, the adhesive layer 2 may absorb the plastic deformation of the protective film 22, to prevent the protective film 22 from rebounding and arching in a process in which the protective film 22 is bent along with the terminal 100, so that the protective film 22 can always be attached to the display surface 211 of the display 21 to protect the display 21. It should be understood that, in another embodiment, the material of the adhesive layer 2 may alternatively be other transparent adhesive materials such as a film of acrylate adhesive or silica gel that has an ultra-low modulus and high rebound resilience.

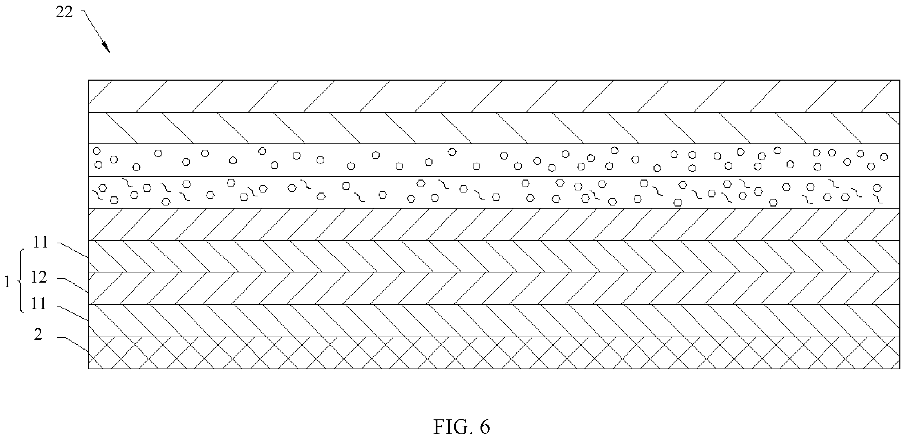

FIG. 6 is a schematic diagram of a cross-sectional structure of the protective film 22 in the display assembly 20 shown in FIG. 4 sectioned in an I-I direction in a second implementation.

A difference between the protective film 22 in this implementation and the protective film 22 in the foregoing implementation lies in that the base film layer 1 includes two layers of high-modulus base films 11 and one layer of low-modulus base film 12, and one layer of high-modulus base film 11, one layer of low-modulus base film 12, and the other layer of high-modulus base film 11 are sequentially stacked. Materials of the two layers of high-modulus base films 11 are the same. It should be noted that, in another implementation, materials of the two layers of high-modulus base films 11 may alternatively be different. Certainly, the base film layer 1 may alternatively include more than three layers of high-modulus base films 11 or a plurality of layers (two or more than two layers) of low-modulus base films 12. This is not specifically limited in this application.

In this implementation, the low-modulus base film 12 is located between the two layers of high-modulus base films 11, and the low-modulus base film 12 may further absorb plastic deformation caused by deformation of the high-modulus base film 11 (that is, the high-modulus base film 11 located on a side that is of the low-modulus base film 12 and that is close to the adhesive layer 2) located inside the low-modulus base film 12, to prevent the protective film 22 from rebounding and warping in a folding process of the display assembly 20, and comprehensively and effectively protect the display 21.

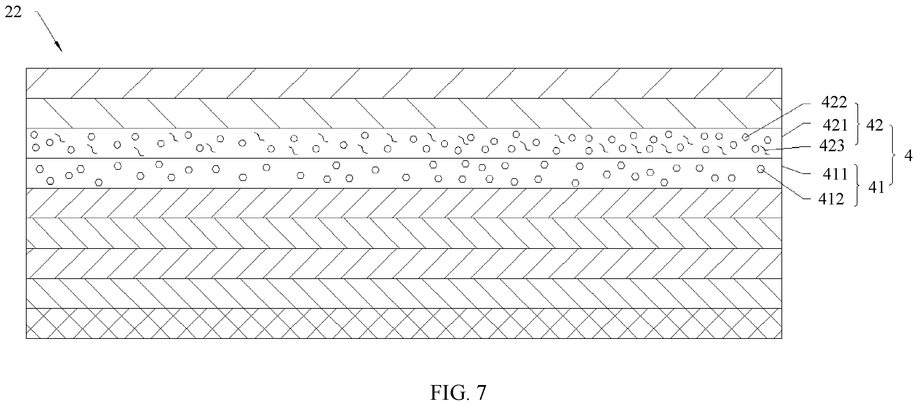

FIG. 7 is a schematic diagram of a cross-sectional structure of the protective film 22 in the display assembly 20 shown in FIG. 4 sectioned in an I-I direction in a third implementation.

A difference between the protective film 22 in this implementation and the protective film 22 in the foregoing second implementation lies in that the high refractive index layer 41 is not doped with an anti-static component, and the low refractive index layer 42 is doped with an anti-static component.

Specifically, the high refractive index layer 41 includes the resin layer 411 and the metal oxide particles 412 doped in the resin layer 411. The low refractive index layer 42 includes the resin layer 421, and the oxide particles or fluoride particles 422 and an anti-static component 423 that are doped in the resin layer 421. In this implementation, the anti-static component 423 is an anti-static agent. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

It should be noted that, in this embodiment, that the anti-static component 423 is doped in the resin layer 421 affects a refractive index of the low refractive index layer 42 to some extent. In this case, the refractive index of the low refractive index layer 42 may be kept between 1.2 and 1.6 by adjusting parameters such as a thickness and a component of the low refractive index layer 42, so as to ensure that the low refractive index layer 42 can cooperate with the high refractive index layer 41 to implement an anti-reflective effect of the anti-reflective layer 4.

In the anti-reflective layer 4 of the protective film 22 in this implementation, the anti-static component is added to the low refractive index layer 42. Because the low refractive index layer 42 is closer to an outer side of the protective film 22, that is, the anti-static component is closer to the outer side of the protective film 22, an anti-static capability of the anti-reflective layer 4 is enhanced. This helps improve anti-static performance of the protective film 22.

It should be noted that, in another implementation, an anti-static component may be added to both the low refractive index layer and the high refractive index layer 41 of the anti-refractive layer 4, so as to enhance the anti-static capability of the anti-refractive layer 4, and improve the anti-static performance of the protective film 22.

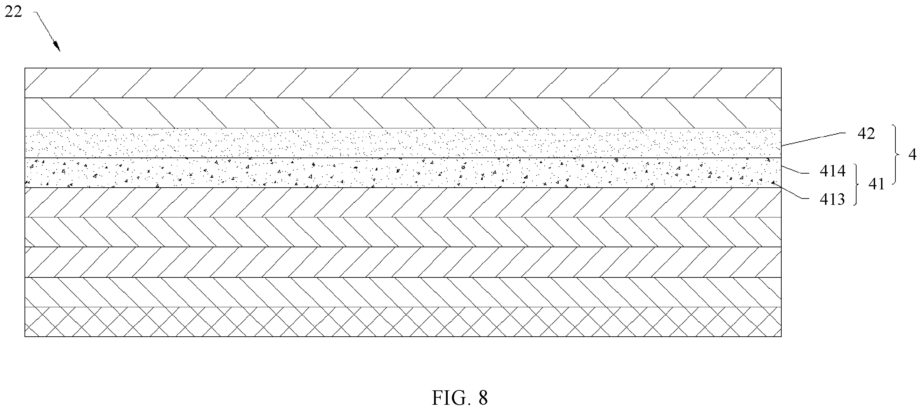

FIG. 8 is a schematic diagram of a cross-sectional structure of the protective film 22 in the display assembly 20 shown in FIG. 4 sectioned in an I-I direction in a fourth implementation.

A difference between the protective film 22 in this implementation and the protective film 22 in the foregoing third implementation lies in that the anti-reflective layer 4 is formed, by using a magnetron sputtering coating process, on a surface that is of the hard coating layer 3 and that is away from the base film layer 1. That is, both the high refractive index layer 41 and the low refractive index layer 42 are formed by using the magnetron sputtering coating process. A thickness of the anti-reflective layer 4 ranges from 50 nm to 1000 nm.

It should be noted that, usually, both the high refractive index layer 41 and the low refractive index layer 42 are formed by using a same process, for example, by using a coating process or by using the magnetron sputtering coating process, so as to reduce production costs. It should be understood that, in another implementation, the high refractive index layer 41 and the low refractive index layer 42 may also be formed by using different processes. For example, the high refractive index layer 41 is formed by using the coating process, and the low refractive index layer 42 is formed by using the magnetron sputtering coating process. Alternatively, the high refractive index layer 41 is formed by using the magnetron sputtering coating process, and the low refractive index layer 42 is formed by using the coating process. This is not specifically limited in this application.

In this implementation, the anti-reflective layer 4 includes one low refractive index layer 42 and one high refractive index layer 41, and the high refractive index layer 41 and the low refractive index are sequentially stacked on the surface that is of the hard coating layer 3 and that is away from the base film layer 1. The high refractive index layer 41 is doped with an anti-static component, so that the anti-reflective layer 4 further has anti-static performance, which can reduce surface resistance of the protective film 22, prevent static electricity from generating, ensure anti-static performance of the protective film 22, avoid adsorption of dust and impurities on the surface of the protective film 22, and improve display quality of the display 21. It should be understood that, in another implementation, the anti-reflective layer 4 may include the plurality of (two or more) low refractive index layers 42 or the plurality of high refractive index layers 41. For example, a total quantity of the anti-reflective layers 4 may be from three layers to eight layers, so as to ensure an anti-reflective effect of the anti-reflective layer 4, while preventing an excessively large thickness of the protective film 22 from affecting a light and thin design of the terminal 100.

The high refractive index layer 41 includes an inorganic film layer 414 and the anti-static component 413 doped in the inorganic film layer 414. In this implementation, a refractive index of the inorganic film layer 414 is greater than 1.6. Specifically, a material of the inorganic film layer 414 includes inorganic metal oxide. Inorganic metal oxide included in the inorganic film layer 414 is Nb₂O₅, TiO₂, or the like. It should be understood that, in another implementation, the material of the inorganic film layer 414 may not include inorganic metal oxide, but include nitride or oxynitride, for example, Si₃N₄.

The anti-static component 413 is doped in inorganic metal oxide. In this implementation, the anti-static component 413 is metal oxide Specifically, the anti-static component 413 includes but is not limited to metal oxide that can create oxygen vacancy, for example, ZnO or In₂O₃.

In addition, a refractive index of the low refractive index layer 42 is less than 1.5. In this implementation, a material of the low refractive index layer 42 includes inorganic materials such as SiO₂.

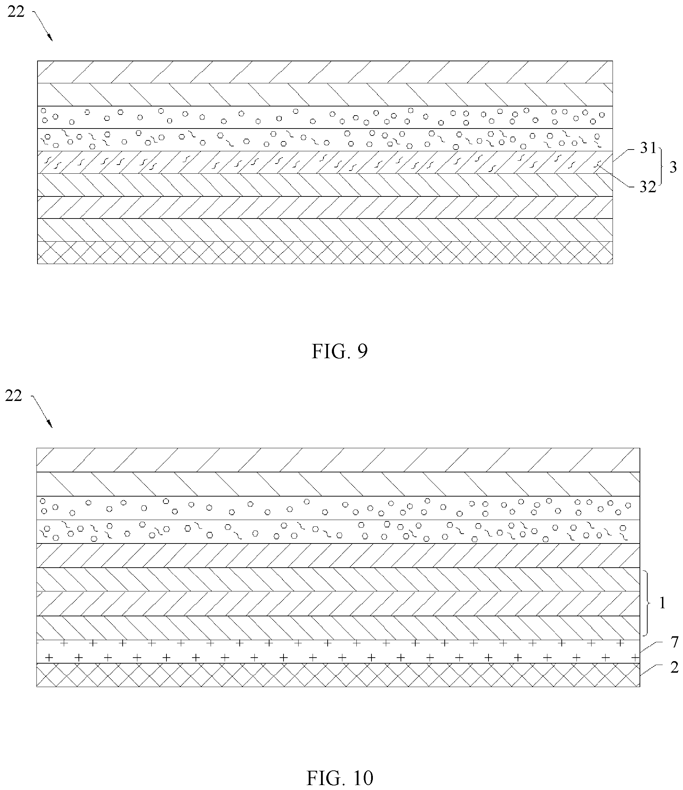

FIG. 9 is a schematic diagram of a cross-sectional structure of the protective film 22 in the display assembly 20 shown in FIG. 4 sectioned in an I-I direction in a fifth implementation.

A difference between the protective film 22 in this implementation and the protective film 22 in the foregoing four implementations lies in that the hard coating layer 3 further includes an anti-static component 32 doped in the resin layer 31. Specifically, the anti-static component 32 is doped in the acrylic resin of the resin layer 31, so as to enhance an anti-static capability of the hard coating layer 3, improve anti-static performance of the protective film 22, reduce surface resistance of the protective film 22, prevent static electricity from generating, and improve display definition of the display assembly 20. The anti-static component 32 is an anti-static agent. The anti-static component 32 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

It should be noted that another layer structure of the protective film 22 shown in FIG. 9 is described by using another layer structure of the protective film 22 in the foregoing second implementation as an example. It should be understood that the another layer structure of the protective film 22 shown in FIG. 9 may also be another layer structure of the protective film 22 in another implementation. Details are not described herein.

FIG. 10 is a schematic diagram of a cross-sectional structure of the protective film 22 in the display assembly 20 shown in FIG. 4 sectioned in an I-I direction in a sixth implementation.

A difference between the protective film 22 in this implementation and the protective film 22 in the foregoing five implementations lies in that the protective film 22 further includes an anti-static layer 7. Specifically, the anti-static layer 7 is located between the adhesive layer 2 and the base film layer 1. The anti-static layer 7 is formed, by using a coating process, on a surface that is of the base film layer 1 and that is away from the hard coating layer 3. In this case, the adhesive layer 2 is stacked on a surface that is of the anti-static layer 7 and that is away from the base film layer 1.

In this implementation, a material of the anti-static layer 7 includes an anti-static agent. Specifically, the material of the anti-static layer 7 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

In the protective film 22 in this implementation, the anti-static layer 7 can improve anti-static performance of the protective film 22. In addition, the anti-static layer 7 can be better adhered to the base film layer 1 and the adhesive layer 2, that is, the anti-static layer 7 can effectively enhance adhesion of the adhesive layer 2 on a surface of the base film layer 1. When the protective film 22 is removed from the display surface 211 of the display 21, no adhesive of the adhesive layer 2 remains on the display surface 211 of the display 21.

It should be noted that another layer structure of the protective film 22 shown in FIG. 10 is described by using another layer structure of the protective film 22 in the foregoing second implementation as an example. It should be understood that the another layer structure of the protective film 22 shown in FIG. 10 may also be another layer structure of the protective film 22 in another implementation. Details are not described herein.

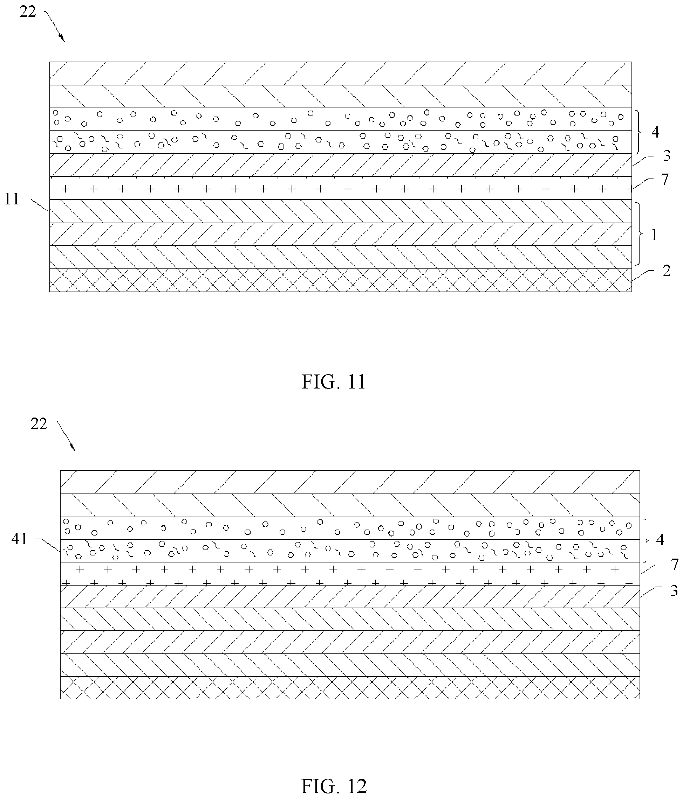

FIG. 11 is a schematic diagram of a cross-sectional structure of the protective film 22 in the display assembly 20 shown in FIG. 4 sectioned in an I-I direction in a seventh implementation.

A difference between the protective film 22 in this implementation and the protective film 22 in the foregoing fifth implementation lies in that the anti-static layer 7 is located on a side that is of the base film layer 1 and that is away from the adhesive layer 2. Specifically, the anti-static layer 7 is located between the hard coating layer 3 and the base film layer 1. That is, the anti-static layer 7 is located between the hard coating layer 3 and the high-modulus base film 11. The anti-static layer 7 is formed, by using a coating process, on a surface that is of the base film layer 1 and that is away from the adhesive layer 2. In this case, the hard coating layer 3 is stacked on a surface that is of the anti-static layer 7 and that is away from the base film layer 1.

Compared with the protective film 22 in the foregoing sixth implementation, the anti-static layer 7 in the protective film 22 in this implementation is located between the hard coating layer 3 and the base film layer 1. In this case, the anti-static layer 7 is closer to an outer side of the protective film 22. This helps improve anti-static performance of the protective film 22.

FIG. 12 is a schematic diagram of a cross-sectional structure of the protective film 22 in the display assembly 20 shown in FIG. 4 sectioned in an I-I direction in an eighth implementation.

A difference between the protective film 22 in this implementation and the protective film 22 in the foregoing seventh implementation lies in that the anti-static layer 7 is located between the hard coating layer 3 and the anti-reflective layer 4. Specifically, the anti-static layer 7 is located between the hard coating layer 3 and the high refractive index layer 41. The anti-static layer 7 is formed, by using a coating process, on a surface that is of the hard coating layer 3 and that is away from the base film layer 1. In this case, the high refractive index layer 41 is stacked on a surface that is of the anti-static layer 7 and that is away from the hard coating layer 3.

Compared with the protective film 22 in the foregoing sixth and seventh implementations, the anti-static layer 7 in the protective film 22 in this implementation is located between the hard coating layer 3 and the anti-reflective layer 4. In this case, the anti-static layer 7 is closer to an outer side of the protective film 22. This helps improve anti-static performance of the protective film 22.

It should be noted that, in another implementation, the protective film 22 may alternatively include a plurality of (two or more) anti-static layers 7, so as to improve an anti-static capability of the protective film 22. For example, the protective film 22 may include two anti-static layers 7. One anti-static layer 7 is located between the adhesive layer 2 and the base film layer 1, and the other anti-static layer 7 is located between the hard coating layer 3 and the base film layer 1 or the anti-reflective layer 4. Alternatively, one anti-static layer 7 is located between the hard coating layer 3 and the base film layer 1, and the other anti-static layer 7 is located between the hard coating layer 3 and the anti-reflective layer 4. In addition, the protective film 22 may also include three anti-static layers 7. One anti-static layer 7 is located between the adhesive layer 2 and the base film layer 1, one anti-static layer 7 is located between the hard coating layer 3 and the base film layer 1, and one anti-static layer 7 is located between the hard coating layer 3 and the anti-reflective layer 4.

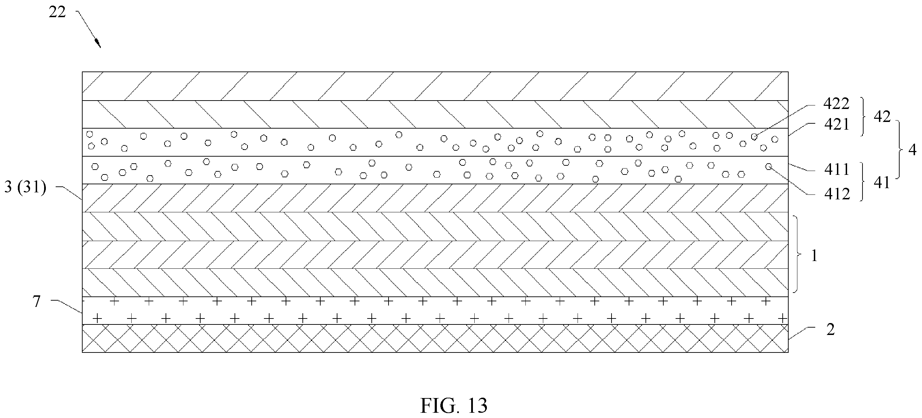

FIG. 13 is a schematic diagram of a cross-sectional structure of a protective film 22 in a display assembly 20 of a second terminal 100 sectioned in an I-I direction in an implementation according to an embodiment of this application.

A difference between the terminal 100 in this embodiment of this application and the terminal 100 in the foregoing embodiment lies in that a low refractive index layer 42 or a high refractive index layer 41 in an anti-reflective layer 4 of the protective film 22 is not doped with an anti-static component.

The anti-reflective layer 4 is located on a side that is of a hard coating layer 3 and that is away from a base film layer 1. In this embodiment, the anti-reflective layer 4 is formed, by using a coating process, on a surface that is of the hard coating layer 3 and that is away from the base film layer 1. Specifically, the high refractive index layer 41 includes a resin layer 411 and metal oxide particles 412 doped in the resin layer 411. The low refractive index layer 42 includes a resin layer 421 and oxide particles or fluoride particles 422 doped in the resin layer 421.

It should be noted that, in another embodiment, the anti-reflective layer 4 may alternatively be formed, by using a magnetron sputtering coating process, on a surface that is of the hard coating layer 3 and that is away from the base film layer 1. In this case, a material of the high refractive index layer 41 includes metal oxides such as Nb₂O₅ and TiO₂, nitrides such as Si₃N₄, or oxynitrides. A material of the low refractive index layer 42 includes inorganic materials such as SiO₂. It should be understood that, in another embodiment, the high refractive index layer 41 and the low refractive index layer 42 may alternatively be formed by using different processes.

In this embodiment, the protective film 22 further includes an anti-static layer 7, so as to improve anti-static performance of the protective film 22. Specifically, a material of the anti-static layer 7 includes an anti-static agent. The material of the anti-static layer 7 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

In an implementation, the anti-static layer 7 is located between an adhesive layer 2 and the base film layer 1. The anti-static layer 7 is formed, by using the coating process, on a surface that is of the base film layer 1 and that is away from the hard coating layer 3. In this case, the adhesive layer 2 is stacked on a surface that is of the anti-static layer 7 and that is away from the base film layer 1.

In the protective film 22 in this implementation, the anti-static layer 7 can improve anti-static performance of the protective film 22. In addition, the anti-static layer 7 can be better adhered to the base film layer 1 and the adhesive layer 2, that is, the anti-static layer 7 can effectively enhance adhesion of the adhesive layer 2 on a surface of the base film layer 1. When the protective film 22 is removed from a display surface 211 of a display 21, no adhesive of the adhesive layer 2 remains on the display surface 211 of the display 21.

In addition, the hard coating layer 3 is located on a side that is of the base film layer 1 and that is away from the anti-static layer 4. Specifically, the hard coating layer 3 includes a resin layer 31. A material of the resin layer 31 includes an acrylate material, a PUA material, a silane modified acrylate material, or a silane modified PUA material. In this implementation, the material of the resin layer 31 includes the acrylate material. The acrylate material included in the resin layer 31 is acrylic resin. It should be noted that, in another implementation, the acrylate material included in the resin layer 31 may not be acrylic resin, but may be another acrylate material other than the acrylic resin.

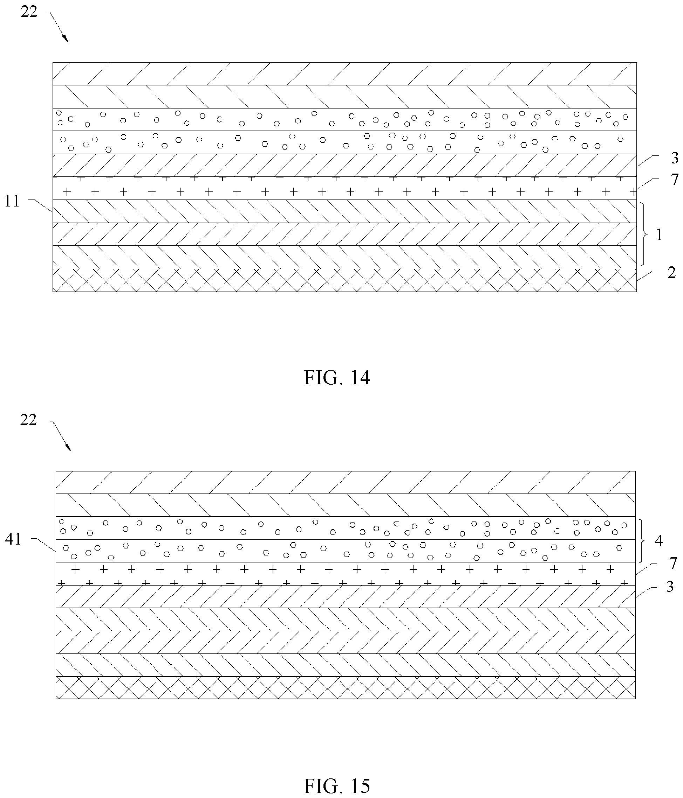

FIG. 14 is a schematic diagram of a cross-sectional structure of the protective film 22 in the display assembly 20 of the second terminal 100 sectioned in an I-I direction in a second implementation according to this embodiment of this application.

A difference between the protective film 22 in this implementation and the protective film 22 in the foregoing implementation lies in that the anti-static layer 7 is located on a side that is of the hard coating layer 3 and that is away from the adhesive layer 2. Specifically, the anti-static layer 7 is located between the hard coating layer 2 and the base film layer 1. That is, the anti-static layer 7 is located between the hard coating layer 2 and a high-modulus base film 11. The anti-static layer 7 is formed, by using a coating process, on a surface that is of the base film layer 1 and that is away from the adhesive layer 2. In this case, the hard coating layer 3 is stacked on a surface that is of the anti-static layer 7 and that is away from the base film layer 1.

Compared with the protective film 22 in the foregoing first implementation, the anti-static layer 7 in the protective film 22 in this implementation is located between the hard coating layer 3 and the base film layer 1. In this case, the anti-static layer 7 is closer to an outer side of the protective film 22. This helps improve anti-static performance of the protective film 22.

FIG. 15 is a schematic diagram of a cross-sectional structure of the protective film 22 in the display assembly 20 of the second terminal 100 sectioned in an I-I direction in a third implementation according to this embodiment of this application.

A difference between the protective film 22 in this implementation and the protective film 22 in the foregoing second implementation lies in that the anti-static layer 7 is located between the hard coating layer 2 and the anti-reflective layer 4. That is, the anti-static layer 7 is located between the hard coating layer 3 and the high refractive index layer 41. The anti-static layer 7 is formed, by using a coating process, on a surface that is of the hard coating layer 3 and that is away from the base film layer 1. In this case, the anti-reflective layer 4 is located on a side that is of the anti-static layer 7 and that is away from the hard coating layer 3.

Compared with the protective film 22 in the foregoing implementation, the anti-static layer 7 in the protective film 22 in this implementation is located between the hard coating layer 3 and the anti-reflective layer 4. In this case, the anti-static layer 7 is closer to an outer side of the protective film 22. This helps improve anti-static performance of the protective film 22.

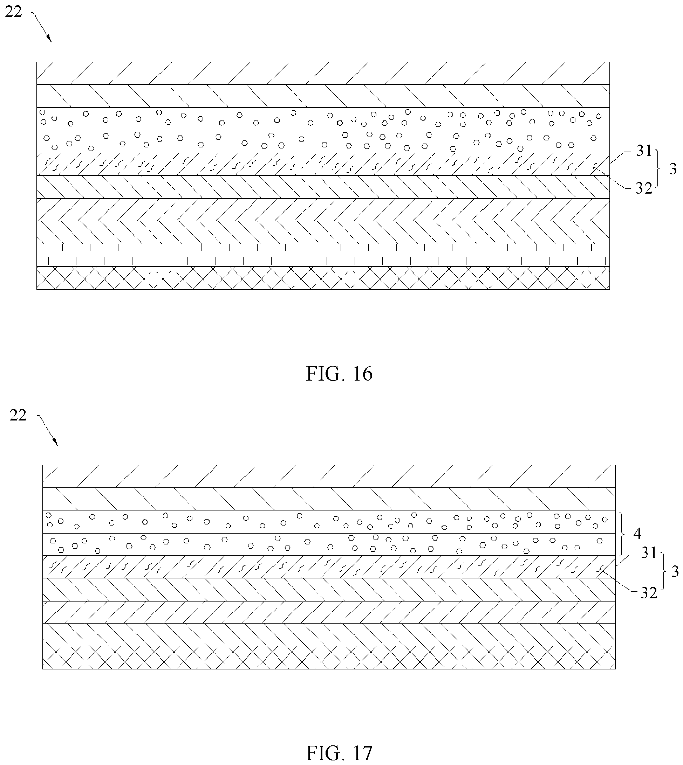

FIG. 16 is a schematic diagram of a cross-sectional structure of the protective film 22 in the display assembly 20 of the second terminal 100 sectioned in an I-I direction in a fourth implementation according to this embodiment of this application.

A difference between the protective film 22 in this implementation and the protective film 22 in the foregoing three implementations lies in that the hard coating layer 3 further includes an anti-static component 32 doped in the resin layer 31, so as to enhance an anti-static capability of the hard coating layer 3, improve anti-static performance of the protective film 22, reduce surface resistance of the protective film 22, prevent static electricity from generating, and improve display definition of the display assembly 20.

In this implementation, the anti-static component 32 is an anti-static agent. The anti-static component 32 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

It should be noted that another layer structure of the protective film 22 shown in FIG. 16 is described by using another layer structure of the protective film 22 in the first implementation in this embodiment as an example. It should be understood that the another layer structure of the protective film 22 shown in FIG. 16 may also be another layer structure of the protective film 22 in another implementation. Details are not described herein.

FIG. 17 is a schematic diagram of a cross-sectional structure of a protective film 22 in a display assembly 20 of a third terminal 100 sectioned in an I-I direction according to an embodiment of this application.

A difference between the terminal 100 in this embodiment of this application and the terminals 100 in the foregoing two embodiments lies in that a low refractive index layer 42 or a high refractive index layer 41 in an anti-reflective layer 4 of the protective film 22 is not doped with an anti-static component, and does not include an anti-static layer 7.

In this embodiment, the hard coating layer 3 further includes an anti-static component 32 doped in the resin layer 31, so as to enhance an anti-static capability of the hard coating layer 3, improve anti-static performance of the protective film 22, reduce surface resistance of the protective film 22, prevent static electricity from generating, and improve display definition of the display assembly 20. The anti-static component 32 is an anti-static agent. The anti-static component 32 includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

It should be noted that another layer structure of the protective film 22 shown in FIG. 17 is described by using another layer structure of the protective film 22 in the second implementation in the first embodiment as an example. It should be understood that the another layer structure of the protective film 22 shown in FIG. 17 may also be another layer structure of the protective film 22 in another implementation. Details are not described herein.

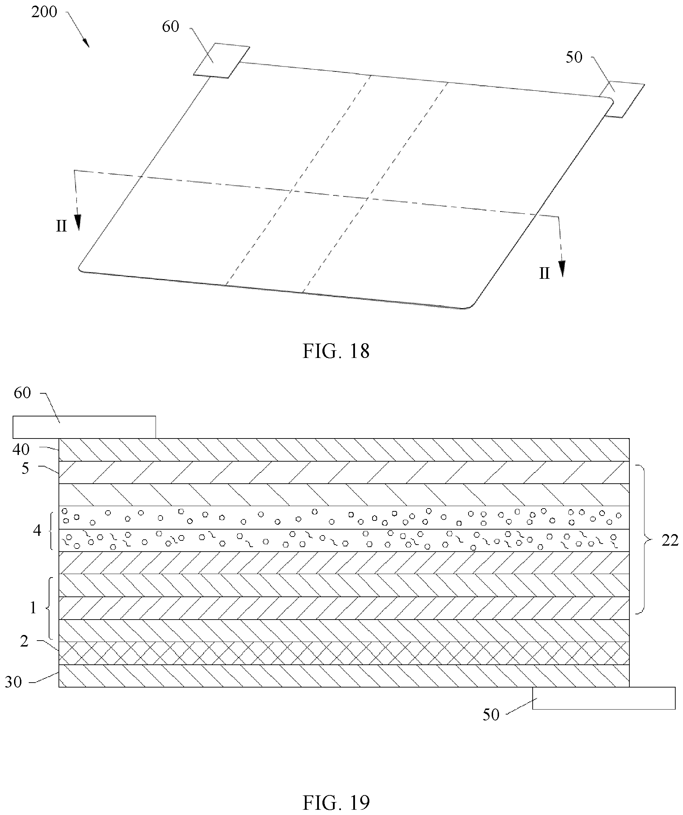

Refer to FIG. 18 and FIG. 19. FIG. 18 is a schematic diagram of a structure of a protective film assembly 200 according to an embodiment of this application. FIG. 19 is a schematic diagram of a cross-sectional structure of the protective film assembly 200 shown in FIG. 18 sectioned in an II-II direction.

It should be noted that a protective film 22 in the protective film assembly 200 shown in FIG. 18 and FIG. 19 is in a state in which the protective film 22 in the terminal 100 shown in FIG. 1 is not attached to the display 21. The protective film assembly 200 is described by using an example in which the protective film 22 is the protective film 22 in the foregoing first embodiment.

The protective film assembly 200 includes any one of the foregoing protective films 22, a first release film 30, a second release film 40, a first tearing tip 50, and a second tearing tip 60. Specifically, the protective film 22 is connected between the second release film 40 and the first release film 30. The second release film 40 covers a surface that is of an anti-fingerprint layer 5 and that is away from an anti-reflective layer 4, and the first release film 30 covers a surface that is of an adhesive layer 2 and that is away from a base film layer 1. In other words, the second release film 40 covers an outer surface of the protective film 22, and the first release film 30 covers an inner surface of the protective film 22. In other words, the second release film 40 and the first release film 30 respectively cover two surfaces that are of the protective film 22 and that are oppositely disposed. This not only can protect the protective film 22 from being damaged in a transportation process, but also can prevent the adhesive layer 2 of the protective film 22 from losing adhesion when being exposed to air.

The first tearing tip 50 is connected to the first release film 30, and protrudes from an edge of the protective film 22. The second tearing tip 60 is connected to the second release film 40, and protrudes from an edge of the protective film 22. In this embodiment, the protective film 22 is a rectangle, and the second release film 40 and the first release film 30 are rectangles that adapt to a shape and a size of the protective film 22. The first tearing tip 50 is connected to a corner of the first release film 30, and the second tearing tip 60 is connected to a corner of the second release film 40, so that the second release film 40 and the first release film 30 are quickly removed from the protective film 22.

When the protective film 22 in the protective film assembly 200 needs to be attached to the display 21 of the terminal 100, the first release film 30 may be easily and quickly removed from the adhesive layer 2 of the protective film 22 by holding the first tearing tip 50. Then a surface that is of the adhesive layer 2 and that is away from the second release film 40 is aligned with a display surface 211 of the display 21 of the terminal 100 and attached to the display 21. Finally, the second release film 40 is removed from the anti-fingerprint layer 5 of the protective film 22 by holding the second tearing tip 60, to complete film attachment to the display 21. It should be noted that, when the protective film 22 is attached, the protective film 22 may be attached to the display surface 211 of the display 21 through the protective film 22 by using a film attachment jig or a device, and then high-pressure bubble removing processing is performed, so that the protective film 22 is completely attached to the display surface 211 of the display 21, thereby protecting the display 21.

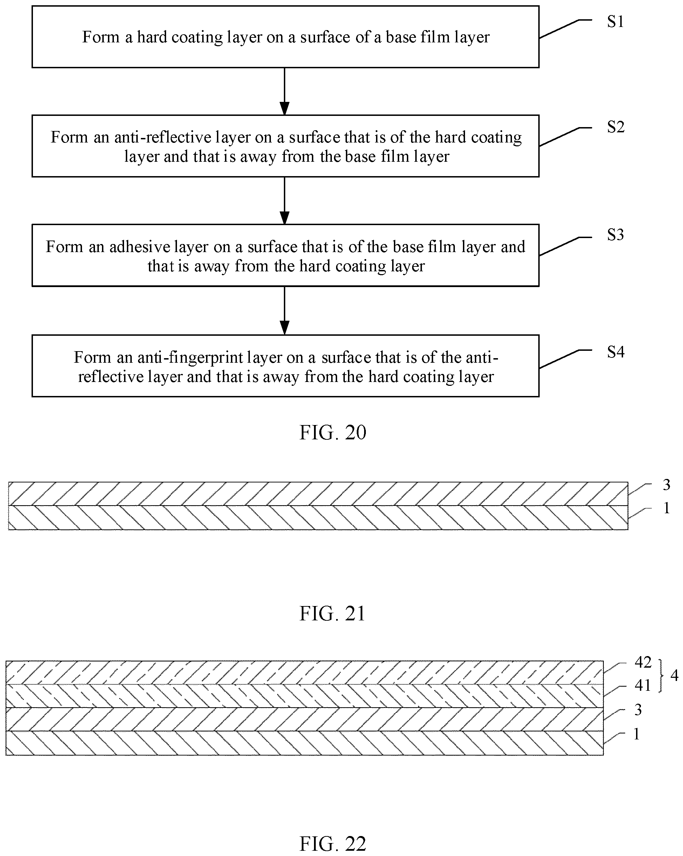

FIG. 20 is a process flowchart of a protective film preparation method according to an embodiment of this application.

The protective film preparation method in this embodiment of this application is used to prepare the protective film 22 in the display assembly 20 of the foregoing terminal 100.

The protective film preparation method in this embodiment includes the following steps.

FIG. 21 is a schematic diagram of a structure in which a hard coating layer 3 is formed in the protective film preparation method shown in FIG. 20.

Step S1: Form the hard coating layer 3 on a surface of the base film layer 1. A material of the hard coating layer 3 includes acrylic resin.

In this embodiment, the hard coating layer 3 is formed on the surface of the base film layer 1 by using a coating process. Specifically, the step S1 may be implemented by using step S101 to step S103.

Step S101: Provide the base film layer 1. In this embodiment, the base film layer 1 is formed by using the coating process.

In an implementation, the step S101 may be implemented by using step S1011 to step S1013.

Step S1011: Provide a high-modulus base film. An elastic modulus of the high-modulus base film is 4 GPa. A material of the high-modulus base film includes PET, and a thickness of the high-modulus base film is about 50 µm. The PET is used as a material of the base film layer 1 in the protective film 22, to support another film layer structure of the protective film 22, and ensure mechanical properties and optical properties of the protective film 22.

Step S1012: Prepare a low-modulus base film coating solution. Specifically, 10 parts of polyether polyol, 20 parts of polyether polyol, 5 parts of hexamethylene diisocyanate, 0.5 parts of toluene diisocyanate, and 0.2 parts of ethylene glycol are mechanically stirred at a high speed for 3 min, to obtain the low-modulus base film coating solution. It should be noted that the unit "part" mentioned in this embodiment of this application may be gram, or may be kilogram.

Step S1013: Coat a surface of the high-modulus base film with the low-modulus base film coating solution, and perform curing processing on the low-modulus base film coating solution on the surface of the high-modulus base film to form a low-modulus base film. That is, the base film layer 1 whose film layer structure is a high-modulus base film/low-modulus base film is obtained. An elastic modulus of the low-modulus base film is 200 Mpa, and a thickness of the low-modulus base film is 50 µm.

In another implementation, the step S101 may be implemented by using step S1011^{/} to step S1014^{/}.

Step S1011^{/}: Provide a high-modulus base film. An elastic modulus of the high-modulus base film is 4 GPa, and a thickness of the high-modulus base film is about 50 µm.

Step S1012^{/}: Prepare a low-modulus base film coating solution. Specifically, 12 parts of xylylene diisocyanate, 25 parts of hexamethylene diisocyanate, 20 parts of polycaprolactone polyol, 10 parts of polyester polyol, 10 parts of trimethylolpropane triacrylate, 5 parts of isobornyl acrylate, 10 parts of hydroxyethyl acrylate, 2 parts of γ-methacryloxy propyl trimethoxyl silane, 1 part of 2,4,6-trimethylbenzoyl diphenyl phosphine oxide photoinitiator, and 0.5 parts of 1-hydroxycyclohexyl phenyl ketone are mechanically stirred at a high speed for 3 min, to obtain the low-modulus base film coating solution.

Step S1013^{/}: Coat a surface of the high-modulus base film with the low-modulus base film coating solution, and perform curing processing on the low-modulus base film coating solution on the surface of the high-modulus base film to form a low-modulus base film, to obtain a film layer structure of the high-modulus base film/low-modulus base film. An elastic modulus of the low-modulus base film is 250 Mpa, and a thickness of the low-modulus base film is 30 µm.

Step S1014^{/}: Cover a high-modulus base film on a surface that is of the low-modulus base film and that is away from the high-modulus base film, to obtain the base film layer 1 whose film layer structure is a high-modulus base film/low-modulus base film/high-modulus base film.

Step S102: Prepare a hard coating layer coating solution. Specifically, 15 g methyl methacrylate, 6 g butyl acrylate, 8 g styrene, 3 g acrylic acid, 40 g ethyl acetate, and 1 g 1-hydroxycyclohexyl phenyl ketone are mechanically stirred at a high speed for 10 min, to obtain the hard coating layer coating solution.

Step S103: Coat the surface of the base film layer 1 with the hard coating layer coating solution, and perform curing processing on the hard coating layer coating solution on the surface of the base film layer 1, to obtain the hard coating layer 3. Specifically, the surface of the base film layer 1 is coated with the hard coating layer coating solution, and the base film layer 1 whose surface is coated with the hard coating layer coating solution is put into an oven with a temperature of 110°C for drying for 80s, so that a solvent of the coating solution evaporates. Then, radiation curing is performed on the hard coating layer coating solution on the surface of the base film layer 1 by using ultraviolet (ultraviolet, UV) light from a mercury lamp source, and irradiation measurement is 2400 mj/cm². The hard coating layer 3 with a thickness of about 2 µm is formed on the surface of the base film layer 1, to obtain a film layer structure of the hard coating layer/base film layer, as shown in FIG. 21.

FIG. 22 is a schematic diagram of a structure in which an anti-reflective layer 4 is formed in the protective film preparation method shown in FIG. 20.

Step S2: Form the anti-reflective layer 4 on a surface that is of the hard coating layer 3 and that is away from the base film layer 1. The anti-reflective layer 4 includes a high refractive index layer 41 and a low refractive index layer 42 that are alternately stacked, and a layer structure that is in the anti-reflective layer 4 and that is away from the hard coating layer 3 is the low refractive index layer 42.

In this embodiment, the anti-reflective layer 4 includes one high refractive index layer 41 and one low refractive index layer 42, and the high refractive index layer 41 and the low refractive index layer 42 are sequentially stacked on the surface that is of the hard coating layer 3 and that is away from the base film layer 1. The high refractive index layer 41 or the low refractive index layer 42 is doped with an anti-static component.

In an implementation, the anti-reflective layer 4 is formed on the surface of the hard coating layer 3 by using a coating process. The high refractive index layer 41 is doped with an anti-static component. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS. Specifically, the step S2 may be implemented by using step S201 to step S204.

Step S201: Prepare a high refractive index layer coating solution. Specifically, a specific amount of anti-static components, 25 g 1-naphthyl methacrylate, 5 g ethyl acrylate, 5 g methyl methacrylate, 2 g zirconia particles, 30 g ethyl acetate, and 2 g ethyl (2,4,6-trimethylbenzoyl) phenylphosphinate are mechanically stirred at a high speed for 20 min, to obtain the high refractive index layer coating solution.

Step S202: Prepare a low refractive index layer coating solution. Specifically, 25 g methyl acrylate, 5 g ethyl acrylate, 5 g methyl methacrylate, 40 g ethyl acetate, 2 g ethyl (2,4,6-trimethylbenzoyl) phenylphosphinate, and 3 g hollow silica particles are mechanically stirred at a high speed for 10 min, to obtain the low refractive index layer coating solution.

It should be noted that a preparation sequence of the step S201 and the step S202 is not particularly limited in this application. The step S202 may alternatively be performed before the step S201. To be specific, the low refractive index layer coating solution may be prepared first, and then the high refractive index layer coating solution is prepared. This is not specifically limited in this application.

Step S203: Coat, with the high refractive index layer coating solution, the surface that is of the hard coating layer 3 and that is away from the base film layer 1, and perform curing processing on the high refractive index layer coating solution on the surface of the hard coating layer 3, to obtain the high refractive index layer 41. Specifically, the surface that is of the hard coating layer 3 and that is away from the base film layer 1 is coated with the high refractive index layer coating solution, and a film layer structure coated with the high refractive index layer coating solution is put into an oven with a temperature of 115°C for drying for 60s, so that a solvent of the high refractive index layer coating solution evaporates. Then, radiation curing is performed on the high refractive index layer coating solution by using UV light from a mercury lamp source, and the irradiation measurement is 2000 mj/cm². The high refractive index layer 41 with a thickness of about 0.05 µm is formed on the surface of the hard coating layer 3, to obtain a film layer structure of the high refractive index layer/hard coating layer/base film layer

Step S204: Coat, with the low refractive index layer coating solution, a surface that is of the high refractive index layer 41 and that is away from the hard coating layer 3, and perform curing processing on the low refractive index layer coating solution on the surface of the high refractive index layer 41, to obtain the low refractive index layer 42. Specifically, the surface that is of the high refractive index layer 41 and that is away from the hard coating layer 3 is coated with the low refractive index layer coating solution, and a film layer structure coated with the low refractive index layer coating solution is put into an oven with a temperature of 115°C for drying for 70s, so that a solvent of the low refractive index layer coating solution evaporates. Then, radiation curing is performed on the low refractive index layer coating solution by using UV light from a mercury lamp source, and the irradiation measurement is 2200 mj/cm². The low refractive index layer 42 with a thickness of about 0.06 µm is formed on the surface of the hard coating layer 3, to obtain a film layer structure of the low refractive index layer/high refractive index layer/hard coating layer/base film layer, that is, obtain a film layer structure of the anti-reflective layer/hard coating layer/base film layer.

A difference between another implementation and the foregoing implementation lies in that the high refractive index layer 41 is not doped with an anti-static component, and the low refractive index layer 42 is doped with an anti-static component. It may be understood that, in another embodiment, both the high refractive index layer 41 and the low refractive index layer 42 may be doped with an anti-static component.

A difference between step S2 in this implementation and the step S2 in the foregoing implementation lies in step S201 and step S202.

Step S201: Prepare a high refractive index layer coating solution. Specifically, 25 g 1-naphthyl methacrylate, 5 g ethyl acrylate, 5 g methyl methacrylate, 2 g zirconia particles, 30 g ethyl acetate, and 2 g ethyl (2,4,6-trimethylbenzoyl) phenylphosphinate are mechanically stirred at a high speed for 20 min, to obtain the high refractive index layer coating solution.

Step S202: Prepare a low refractive index layer coating solution. Specifically, a specific amount of anti-static components, 25 g methyl acrylate, 5 g ethyl acrylate, 5 g methyl methacrylate, 40 g ethyl acetate, 2 g ethyl (2,4,6-trimethylbenzoyl) phenylphosphinate, and 3 g hollow silica particles are mechanically stirred at a high speed for 10 min, to obtain the low refractive index layer coating solution.

A difference between a third implementation and the foregoing two implementation lies in that the anti-reflective layer 4 is formed on a surface of the hard coating layer 3 by using a magnetron sputtering coating process. The high refractive index layer 41 is doped with an anti-static component. The anti-static component includes but is not limited to anti-static components such as ZnO and In₂O₃. Specifically, the step S2 may be implemented by using steps S201^{/} and S202^{/}.

Step S201^{/}: Perform magnetron sputter coating on a surface that is of the hard coating layer 3 and that is away from the base film layer 1 by using targets such as an Nb target, a Ti target, or a Si target doped with anti-static metal such as Zn or In, to form the high refractive index layer 41 of inorganic materials such as Nb₂O₅, TiO2, or Si₃N₄ that include anti-static components such as ZnO and In₂O₃, so as to obtain a film layer structure of the high refractive index layer/hard coating layer/base film layer.

Step S202^{/}: Perform magnetron sputtering coating on a surface that is of the high refractive index layer 41 and that is away from the hard coating layer 3 by using targets such as the Si target, to form the low refractive index layer 42 including SiO₂, so as to obtain a film layer structure of the low refractive index layer/high refractive index layer/hard coating layer/base film layer, that is, obtain a film layer structure of the anti-refractive layer/hard coating layer/base film layer.

It should be noted that, usually, both the high refractive index layer 41 and the low refractive index layer 42 are formed by using a same process, for example, by using the coating process or the magnetron sputtering coating process, so as to reduce production costs. Certainly, in other implementations, the high refractive index layer 41 and the low refractive index layer 42 may also be formed by using different processes. For example, the high refractive index layer 41 is first formed by using the coating process, and then the low refractive index layer 42 is formed by using the magnetron sputtering coating process. Alternatively, the high refractive index layer 41 is first formed by using the magnetron sputtering process, and then the low refractive index layer 42 is formed by using the coating process. This is not specifically limited in this application.

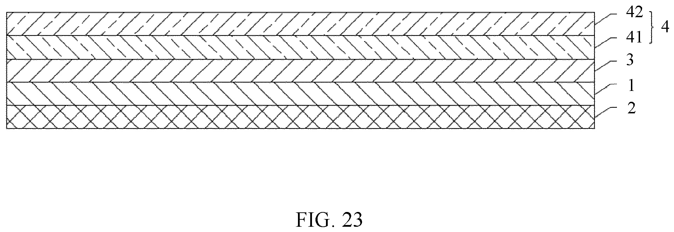

FIG. 23 is a schematic diagram of a structure in which an adhesive layer 2 is formed in the protective film preparation method shown in FIG. 20.

Step S3: Form the adhesive layer 2 on a surface that is of the base film layer 1 and that is away from the hard coating layer 3. A material of the adhesive layer 2 includes acrylic adhesive. In this embodiment, the adhesive layer 2 is formed on the surface of the base film layer 1 by using the coating process. Specifically, the step S3 may be implemented by using step S301 and step S302.

Step S301: Prepare an adhesive layer coating solution. Specifically, 10 g isooctyl acrylate, 10 g butyl acrylate, 2 g methyl methacrylate, 40 g ethyl acetate, and 1 g aminoethyl acrylate are mechanically stirred at a high speed for 10 min, to obtain the adhesive layer coating solution.

Step S302: Coat, with an adhesive layer coating solution, the surface that is of the base film layer 1 and that is away from the hard coating layer 3, and perform curing processing on the adhesive layer coating solution on the surface of the base film layer 1, to obtain the adhesive layer 2. Specifically, the surface that is of the base film layer 1 and that is away from the hard coating layer 3 is coated with the adhesive layer coating solution, and a film layer structure coated with the adhesive layer coating solution on the surface of the base film layer 1 is put into an oven with a temperature of 110°C for drying for 75s, so that a solvent of the coating solution evaporates, and the adhesive layer 2 with a thickness of about 20 µm is obtained, to obtain a film layer structure of the anti-reflective layer/hard coating layer/base film layer/adhesive layer 2.

Step S4: Form an anti-fingerprint layer 5 on a surface that is of the anti-reflective layer 4 and that is away from the hard coating layer 3, to obtain the protective film 22, as shown in FIG. 5. A material of the anti-fingerprint layer 5 includes perfluoropolyether silane.

In this embodiment, the anti-fingerprint layer 5 is formed on the surface of the anti-reflective layer 4 by using an R2R technology. A base layer 6 is first formed on the surface that is of the anti-reflective layer 4 and that is away from the hard coating layer 3, and then the anti-fingerprint layer 5 is formed on a surface that is of the base layer 6 and that is away from the anti-reflective layer 4. Specifically, the base layer 6 including organic silane is first formed on the surface of the anti-reflective layer 4 in an evaporation manner, and then the anti-fingerprint layer 5 that includes perfluoropolyether siloxane and that has a thickness of about 15 nm is formed on the surface of the base layer 6 in the evaporation manner, so as to obtain a film layer structure of the anti-fingerprint layer/anti-reflective layer/hard coating layer/base film layer/adhesive layer. It should be noted that, in another embodiment, the base layer 6 including inorganic silica may also be formed on the surface that is of the anti-reflective layer 4 and that is away from the hard coating layer 3 by using a sputtering process. This is not specifically limited in this application.

In this embodiment, before the step S4 and after the step S3, the protective film preparation method further includes the following steps.

Step S31: Cover a first release film 30 on a surface that is of the adhesive layer 2 and that is away from the base film layer 1, to obtain a film layer structure of the anti-reflective layer/hard coating layer/base film layer/adhesive layer/first release film. A material of the first release film 30 includes PET, and a thickness of the first release film 30 is about 50 µm.

In addition, after the step S4, the protective film preparation method further includes steps S5 and S6.

Step S5: Cover a second release film 40 on a surface that is of the anti-fingerprint layer 5 and that is away from the anti-reflective layer 4, to obtain a film layer structure of the second release film/anti-fingerprint layer/anti-reflective layer/hard coating layer/base film layer/adhesive layer/first release film, that is, obtain a roll of the protective film. A material of the second release film 40 includes PET, and a thickness of the second release film 40 is about 50 µm.

Step S6: Cut the roll of the protective film, to obtain the protective film assembly 200, as shown in FIG. 9. Specifically, the protective film assembly 200 that adapts to the display 21 of the terminal 100 is obtained through die cut by using die-cut mold, and an edge of the protective film 22 in the protective film assembly 200 shrinks inward by 1.0 mm relative to an edge of the display 21, so as to ensure that the protective film 22 is well attached to the display surface 211, and the protective film 22 is not prone to crimp.

It should be noted that the protective film 22 prepared by using the protective film preparation method in this embodiment may be observed and measured by using ion polishing and a transmission electron microscope (transmission electron microscope, TEM) or a scanning electron microscope (scanning electron microscope, SEM). Material composition and performance of each layer structure in the protective film assembly 200 may be tested by using a fourier transform infrared spectrometer (fourier transform infrared spectrometer, FTIR Spectrometer), an X-ray photoelectron spectroscopy (X-ray photoelectron spectroscopy, XPS), nuclear magnetic resonance (nuclear magnetic resonance, NMR), an energy dispersive spectrometer (energy dispersive spectrometer, EDX), a rheometer (rheometer), thermal mechanical analysis (thermal mechanical analysis, TMA), or the like.

The protective film 22 prepared by using the protective film preparation method in this embodiment is attached to the display 21 of the foldable terminal 100, and dynamic bending performance and static bending performance of the protective film 22 are tested. After being dynamically bent for 30,000 times, because the adhesive layer 2 is made of acrylic adhesive with an ultra-low modulus and high rebound resilience, the protective film 22 has bendable performance, and the protective film 22 does not rebound and arch, and is still well attached to the display 21 of the terminal 100 to protect the display 21.

It can be learned from testing reflectivity and transmittance of the protective film 22 prepared by using the protective film preparation method in this embodiment that the transmittance of the protective film 22 ranges from 94% to 95%, that is, the transmittance of the protective film 22 is relatively high. When the protective film 22 is attached to the display 21 of the terminal 100, a display image of the display 21 is not affected. In addition, after the protective film 22 is attached to the display 21 of the foldable terminal 100, reflectivity of light with a wavelength of 550 nm on the protective film 22 ranges from 2.8% to 2.9%. To be specific, the protective film 22 has a relatively good anti-reflective effect, prevents glare such as "dazzle" when light is emitted to the terminal 100, and prevents a user from feeling dazzling. This not only improves display definition of the display 21, but also improves use experience of the user.

In addition, the protective film 22 is rubbed by using steel wool with a load of 1 kgf, and wear resistance and anti-fingerprint performance of the protective film 22 are tested. Under conditions as follows: Bonstar #0000 steel wool, a friction area of 20 × 20 mm², and a stroke of 40 mm, after the protective film 22 is rubbed for 1000 times, the protective film 22 is not removed or scratched, that is, the protective film 22 has good wear resistance. In this case, a water contact angle of a surface of the protective film 22 ranges from 113 degrees to 115 degrees, and the protective film 22 has relatively good oil stain resistance performance. In addition, a coefficient of kinetic friction of the surface of the protective film 22 ranges from 0 to 0.05. When the user slides on the surface of the protective film 22, friction resistance is relatively small, and the user can slide smoothly on the surface of the protective film 22. This helps improve use experience of the user.

An embodiment of this application further provides another protective film production method, including:

Step S1: Form the hard coating layer 3 on a surface of the base film layer 1. A material of the hard coating layer 3 includes acrylic resin.

A difference between the step S1 in the protective film preparation method in this embodiment and the step S1 in the protective film preparation method in the foregoing embodiment lies in step S101 and step S103.

Step S101: Provide the base film layer 1. A material of the base film layer 1 includes PET, and a thickness of the base film layer 1 is about 38 µm.

Step S103: Coat the surface of the base film layer 1 with the hard coating layer coating solution, and perform curing processing on the hard coating layer coating solution on the surface of the base film layer 1, to obtain the hard coating layer 3. Specifically, the surface of the base film layer 1 is coated with the hard coating layer coating solution, and the base film layer 1 whose surface is coated with the hard coating layer coating solution is put into an oven with a temperature of 108°C for drying for 90s, so that a solvent of the coating solution evaporates. Then, irradiation curing is performed on the hard coating layer coating solution on the surface of the base film layer 1 by using UV light from a mercury lamp source, and irradiation measurement is 2200 mj/cm². The hard coating layer 3 with a thickness of about 3 µm is formed on the surface of the base film layer 1, to obtain a film layer structure of the hard coating layer/base film layer

Step S2: Form the anti-reflective layer 4 on a surface that is of the hard coating layer 3 and that is away from the base film layer 1. The anti-reflective layer 4 includes a high refractive index layer 41 and a low refractive index layer 42 that are alternately stacked, and a layer structure that is in the anti-reflective layer 4 and that is away from the hard coating layer 3 is the low refractive index layer 42.

A difference between the step S1 in the protective film preparation method in this embodiment and the step S1 in the protective film preparation method in the foregoing embodiment lies in step S203 and step S204.

Step S203: Coat, with the high refractive index layer coating solution, the surface that is of the hard coating layer 3 and that is away from the base film layer 1, and perform curing processing on the high refractive index layer coating solution on the surface of the hard coating layer 3, to obtain the high refractive index layer 41. Specifically, the surface that is of the hard coating layer 3 and that is away from the base film layer 1 is coated with the high refractive index layer coating solution, and a layer structure coated with the high refractive index layer coating solution is put into an oven with a temperature of 112°C for drying for 75s, so that a solvent of the high refractive index layer coating solution evaporates. Then, radiation curing is performed on the high refractive index layer coating solution by using UV light from a mercury lamp source, and the irradiation measurement is 2150 mj/cm². The high refractive index layer 41 is formed on the surface of the hard coating layer 3, to obtain a film layer structure of the high refractive index layer/hard coating layer/base film layer.

Step S204: Coat, with the low refractive index layer coating solution, a surface that is of the high refractive index layer 41 and that is away from the hard coating layer 3, and perform curing processing on the low refractive index layer coating solution on the surface of the high refractive index layer 41, to form the low refractive index layer 42 with a thickness of about 0.02 µm, to obtain a film layer structure of the low refractive index layer/high refractive index layer/hard coating layer/base film layer.

In this embodiment, the step S2 further includes step S205 and step S206.

Step S205: Coat, with the high refractive index layer coating solution, a surface that is of the low refractive index layer 42 and that is away from the high refractive index layer 41, and perform curing processing on the high refractive index layer coating solution on the surface of the low refractive index layer 42, to obtain the high refractive index layer 41. Specifically, the surface that is of the hard coating layer 3 and that is away from the base film layer 1 is coated with the high refractive index layer coating solution, and a film layer structure coated with the high refractive index layer coating solution is put into an oven with a temperature of 113°C for drying for 65s, so that a solvent of the high refractive index layer coating solution evaporates. Then, radiation curing is performed on the high refractive index layer coating solution by using UV light from a mercury lamp source, and the irradiation measurement is 2100 mj/cm². The high refractive index layer 41 with a thickness of about 0.06 µm is formed on the surface of the low refractive index layer 42, to obtain a film layer structure of the high refractive index layer/low refractive index layer/high refractive index layer/hard coating layer/base film layer

Step S206: Coat, with the low refractive index layer coating solution, a surface that is of the high refractive index layer 41 and that is away from the low refractive index layer 42, and perform curing processing on the low refractive index layer coating solution on the surface of the high refractive index layer 41, to obtain the low refractive index layer 42. Specifically, the surface that is of the high refractive index layer 41 and that is away from the low refractive index layer 42 is coated with the low refractive index layer coating solution, and a film layer structure coated with the low refractive index layer coating solution is put into an oven with a temperature of 115°C for drying for 50s, so that a solvent of the low refractive index layer coating solution evaporates. Then, radiation curing is performed on the low refractive index layer coating solution by using UV light from a mercury lamp source, and the irradiation measurement is 2300 mj/cm². The low refractive index layer 42 with a thickness of about 0.04 µm is formed on the surface of the high refractive index layer 41, to obtain a film layer structure of the low refractive index layer/high refractive index layer/hard coating layer/base film layer, that is, obtain a film layer structure of the anti-reflective layer/low refractive index layer/high refractive index layer/hard coating layer/base film layer.

Step S3: Form the adhesive layer 2 on a surface that is of the base film layer 1 and that is away from the hard coating layer 3. A material of the adhesive layer 2 includes acrylic adhesive.

A difference between the step S3 in the protective film preparation method in this embodiment and the step S1 in the protective film preparation method in the foregoing embodiment lies in step S302.

Step S302: Coat, with an adhesive layer coating solution, the surface that is of the base film layer 1 and that is away from the hard coating layer 3, and perform curing processing on the adhesive layer coating solution on the surface of the base film layer 1, to obtain the adhesive layer 2. Specifically, the surface that is of the base film layer 1 and that is away from the hard coating layer 3 is coated with the adhesive layer coating solution, and a film layer structure coated with the adhesive layer coating solution on the surface of the base film layer 1 is put into an oven with a temperature of 108°C for drying for 85s, so that a solvent of the coating solution evaporates, and the adhesive layer 2 with a thickness of about 25 µm is obtained, to obtain a film layer structure of the anti-reflective layer/hard coating layer/base film layer/adhesive layer 2.

Step S31: Cover a first release film 30 on a surface that is of the adhesive layer 2 and that is away from the base film layer 1, to obtain a film layer structure of the anti-reflective layer/hard coating layer/base film layer/adhesive layer/first release film 30. A material of the first release film 30 includes PET, and a thickness of the first release film 30 is about 50 µm.

Step S4: Form the anti-fingerprint layer 5 on a surface that is of the anti-reflective layer 4 and that is away from the hard coating layer 3, to obtain a film layer structure of the anti-fingerprint layer/anti-reflective layer/hard coating layer/base film layer/adhesive layer/first release film 30. A material of the anti-fingerprint layer 5 includes perfluoropolyether silane, and a thickness of the anti-fingerprint layer 5 is about 20 µm.

Step S5: Cover a second release film 40 on a surface that is of the anti-fingerprint layer 5 and that is away from the anti-reflective layer 4, to obtain a film layer structure of the second release film/anti-fingerprint layer/anti-reflective layer/hard coating layer/base film layer/adhesive layer/first release film 30, that is, obtain a roll of the protective film. A material of the second release film 40 includes PET, and a thickness of the second release film 40 is about 50 µm.

Step S6: Cut the roll of the protective film, to obtain the protective film assembly 200.

The protective film 22 prepared by using the protective film preparation method in this embodiment is attached to the display 21 of the foldable terminal 100, and dynamic bending performance and static bending performance of the protective film 22 are tested. After a plurality of dynamic bending and static bending tests, the protective film 22 does not rebound and arch, and is still well attached to the display 21 of the terminal 100 to protect the display 21.

It can be learned from testing reflectivity and transmittance of the protective film 22 prepared by using the protective film preparation method in this embodiment that the transmittance of the protective film 22 ranges from 94% to 95%, that is, the transmittance of the protective film 22 is relatively high. When the protective film 22 is attached to the display 21 of the terminal 100, a display image of the display 21 is not affected. In addition, after the protective film 22 is attached to the display 21 of the foldable terminal 100, reflectivity of light with a wavelength of 550 nm on the protective film 22 ranges from 2.7% to 2.8%. To be specific, the protective film 22 has a relatively good anti-reflective effect, prevents glare such as "dazzle" when light is emitted to the terminal 100, and prevents a user from feeling dazzling. This not only improves display definition of the display 21, but also improves use experience of the user

In addition, the protective film 22 is rubbed by using steel wool with a load of 1 kgf, and wear resistance and anti-fingerprint performance of the protective film 22 are tested. Under conditions as follows: Bonstar #0000 steel wool, a friction area of 20 × 20 mm², and a stroke of 40 mm, after the protective film 22 is rubbed for 1000 times, the protective film 22 is not removed or scratched, that is, the protective film 22 has good wear resistance. In this case, a water contact angle of a surface of the protective film 22 ranges from 111 degrees to 114 degrees, and the protective film 22 has relatively good oil stain resistance performance. In addition, a coefficient of kinetic friction of the surface of the protective film 22 ranges from 0 to 0.04. When the user slides on the surface of the protective film 22, friction resistance is relatively small, and the user can slide smoothly on the surface of the protective film 22. This helps improve use experience of the user.

An embodiment of this application further provides a third protective film preparation method. A difference between the protective film preparation method in this embodiment and the protective film preparation method in the foregoing two embodiments lies in step S1.

Step S1: Form the hard coating layer 3 on a surface of the base film layer 1. A material of the hard coating layer 3 includes acrylic resin and an anti-static component doped in the acrylic resin. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

Specifically, a difference between the step S1 in the protective film preparation method in this embodiment and the step S1 in the protective film preparation method in the foregoing two embodiments lies in step S 102.

Step S102: Prepare a hard coating layer coating solution. Specifically, a specific amount of anti-static component, 15 g methyl methacrylate, 6 g butyl acrylate, 8 g styrene, 3 g acrylic acid, 40 g ethyl acetate, and 1 g 1-hydroxycyclohexyl phenyl ketone are mechanically stirred at a high speed for 10 min, to obtain the hard coating layer coating solution.

It should be noted that a specific technological process of other steps in the protective film preparation method in this embodiment is basically the same as that of other steps in the protective film preparation method described in the foregoing two embodiments. Details are not described herein again.

An embodiment of this application further provides a fourth protective film preparation method. A difference between the protective film preparation method in this embodiment and the protective film preparation method in the foregoing three embodiments lies in that, after the step S2 and before step S3, the protective film preparation method further includes step S21.

Step S21: Form the anti-static layer 7 on a surface that is of the base film layer 1 and that is away from the hard coating layer 3. A material of the anti-static layer 7 includes an anti-static component. In this embodiment, the anti-static layer 7 is formed, by using a coating process, on the surface that is of the base film layer 1 and that is away from the hard coating layer 3. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

Step S3: Form the adhesive layer 2 on a surface that is of the anti-static layer 7 and that is away from the base film layer 1.

It should be noted that a specific method process of other steps in the protective film preparation method in this embodiment is basically the same as that of other steps in the protective film preparation method described in the foregoing three embodiments. Details are not described herein again.

An embodiment of this application further provides a fifth protective film preparation method. A difference between the protective film preparation method in this embodiment and the protective film preparation method in the foregoing first embodiment to the foregoing third embodiment lies in that, before step S1, the protective film preparation method further includes step S0.

Step S0: Form the anti-static layer 7 on a surface of the base film layer 1. A material of the anti-static layer 7 includes an anti-static component. In this embodiment, the anti-static layer 7 is formed, by using a coating process, on the surface that is of the base film layer 1 and that is away from the hard coating layer 3. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

Step S1: Form the hard coating layer 3 on a surface that is of the anti-static layer 7 and that is away from the base film layer 1.

It should be noted that a specific technological process of other steps in the protective film preparation method in this embodiment is basically the same as that of other steps in the protective film preparation method described in the foregoing first embodiment to the foregoing third embodiment. Details are not described herein again.

An embodiment of this application further provides a sixth protective film preparation method. A difference between the protective film preparation method in this embodiment and the protective film preparation method in the foregoing first embodiment to the foregoing third embodiment lies in that, after the step S1 and before step S2, the protective film preparation method further includes step S11.

Step S11: Form the anti-static layer 7 on a surface that is of the hard coating layer 3 and that is away from the base film layer 1. A material of the anti-static layer 7 includes an anti-static component. In this embodiment, the anti-static layer 7 is formed, by using a coating process, on the surface that is of the base film layer 1 and that is away from the hard coating layer 3. The anti-static component includes but is not limited to anionic anti-static agents such as an alkyl sulfonic alkali salt and an alkyl phosphoric alkali salt, cationic anti-static agents such as alkyl quaternary ammonium salt and alkyl quaternary phosphate salt or alkyl quaternary phosphonium salt surfactants, non-ionic anti-static agents such as aliphatic ethoxy alkylamines, or conductive polymer anti-static agents such as PEDOT: PSS.

Step S2: Form the anti-reflective layer 4 on a surface that is of the anti-static layer 7 and that is away from the hard coating layer 3.

It should be noted that a specific technological process of other steps in the protective film preparation method in this embodiment is basically the same as that of other steps in the protective film preparation method in the foregoing first embodiment to the foregoing third embodiment. Details are not described herein again.

An embodiment of this application further provides a seventh protective film preparation method. A difference between the protective film preparation method in this embodiment and the protective film preparation method in the foregoing third embodiment to the foregoing sixth embodiment lies in step S2.

In this embodiment, the high refractive index layer 41 or the low refractive index layer 42 of the anti-reflective layer 4 is not doped with an anti-static component.

In an implementation, the anti-reflective layer 4 is formed on the surface of the hard coating layer 3 by using a coating process. In this implementation, the step S2 may be implemented by using step S201 to step S204.

Step S201: Prepare a high refractive index layer coating solution. Specifically, 25 g 1-naphthyl methacrylate, 5 g ethyl acrylate, 5 g methyl methacrylate, 2 g zirconia particles, 30 g ethyl acetate, and 2 g ethyl (2,4,6-trimethylbenzoyl) phenylphosphinate are mechanically stirred at a high speed for 20 min, to obtain the high refractive index layer coating solution.

Step S202: Prepare a low refractive index layer coating solution. Specifically, 25 g methyl acrylate, 5 g ethyl acrylate, 5 g methyl methacrylate, 40 g ethyl acetate, 2 g ethyl (2,4,6-trimethylbenzoyl) phenylphosphinate, and 3 g hollow silica particles are mechanically stirred at a high speed for 10 min, to obtain the low refractive index layer coating solution.

Step S203: Coat, with the high refractive index layer coating solution, a surface that is of the hard coating layer 3 and that is away from the base film layer 1, and perform curing processing on the high refractive index layer coating solution on the surface of the hard coating layer 3 to form the high refractive index layer 41, to obtain a film layer structure of the high refractive index layer/hard coating layer/base film layer.

Step S204: Coat, with the low refractive index layer coating solution, a surface that is of the high refractive index layer 41 and that is away from the hard coating layer 3, and perform curing processing on the low refractive index layer coating solution on the surface of the high refractive index layer 41, to form the low refractive index layer 42, to obtain a film layer structure of the low refractive index layer/high refractive index layer/hard coating layer/base film layer, that is, obtain a film layer structure of the anti-reflective layer/hard coating layer/base film layer

In another implementation, the anti-reflective layer 4 is formed on the surface of the hard coating layer 3 by using a magnetron sputtering coating process. In this implementation, the step S2 may be implemented by using steps S201^{/} and S202^{/}.

Step S201^{/}: Perform magnetron sputter coating on a surface that is of the hard coating layer 3 and that is away from the base film layer 1 by using targets such as an Nb target, a Ti target, or a Si target, to form the high refractive index layer 41 of inorganic materials such as Nb₂O₅, TiO2, or Si₃N₄ that include anti-static components such as ZnO and In₂O₃, so as to obtain a film layer structure of the high refractive index layer/hard coating layer/base film layer.

Step S202^{/}: Perform magnetron sputtering coating on a surface that is of the high refractive index layer 41 and that is away from the hard coating layer 3 by using targets such as the Si target, to form the low refractive index layer 42 including SiO₂, so as to obtain a film layer structure of the low refractive index layer/high refractive index layer/hard coating layer/base film layer, that is, obtain a film layer structure of the anti-refractive layer/hard coating layer/base film layer.

It should be noted that a specific technological process of other steps in the protective film preparation method in this embodiment is basically the same as that of other steps in the protective film preparation method described in the foregoing third embodiment to the foregoing sixth embodiment. Details are not described herein again.

An embodiment of this application further provides an eighth protective film preparation method. A difference between the protective film preparation method in this embodiment and the protective film preparation method in the foregoing seventh embodiment lies in step S1.

Step S1: Form the hard coating layer 3 on a surface of the base film layer 1. A material of the hard coating layer 3 includes acrylic resin.

A difference between the step S1 in the protective film preparation method in this embodiment and the step S1 in the protective film preparation method in the foregoing embodiment lies in step S101 and step S103.

Step S101: Provide the base film layer 1. A material of the base film layer 1 includes PET, and a thickness of the base film layer 1 is about 38 µm.

Step S103: Coat the surface of the base film layer 1 with the hard coating layer coating solution, and perform curing processing on the hard coating layer coating solution on the surface of the base film layer 1, to obtain the hard coating layer 3. Specifically, the surface of the base film layer 1 is coated with the hard coating layer coating solution, and the base film layer 1 whose surface is coated with the hard coating layer coating solution is put into an oven with a temperature of 108°C for drying for 90s, so that a solvent of the coating solution evaporates. Then, irradiation curing is performed on the hard coating layer coating solution on the surface of the base film layer 1 by using UV light from a mercury lamp source, and irradiation measurement is 2200 mj/cm². The hard coating layer 3 with a thickness of about 3 µm is formed on the surface of the base film layer 1, to obtain a film layer structure of the hard coating layer/base film layer

It should be noted that a specific technological process of other steps in the protective film preparation method in this embodiment is basically the same as that of other steps in the protective film preparation method in the foregoing seventh embodiment. Details are not described herein again.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A protective film, comprising an adhesive layer and a base film layer that are stacked, wherein the adhesive layer is adhered to a foldable display, the base film layer comprises one or more layers of high-modulus base films and one or more layers of low-modulus base films, an elastic modulus of the high-modulus base film is greater than an elastic modulus of the low-modulus base film, the high-modulus base films and the low-modulus base films are alternately stacked, and a surface layer that is in the base film layer and that is away from the adhesive layer is the high-modulus base film.

2. The protective film according to claim 1, wherein the elastic modulus of the high-modulus base film is greater than 2 GPa, and the elastic modulus of the low-modulus base film is less than 300 MPa.

3. The protective film according to claim 1 or 2, wherein a material of the high-modulus base film comprises a polymer optical polyester material or colorless polyimide, and a material of the low-modulus base film comprises polyurethane or polyurethane acrylate.

4. The protective film according to any one of claims 1 to 3, wherein the protective film further comprises an anti-reflective layer, the anti-reflective layer is located on a side that is of the base film layer and that is away from the adhesive layer, the anti-reflective layer comprises one or more high refractive index layers and one or more low refractive index layers, a refractive index of the high refractive index layer is greater than a refractive index of the low refractive index layer, the high refractive index layers and the low refractive index layers are alternately stacked, and a surface layer that is in the anti-reflective layer and that is away from the adhesive layer is the low refractive index layer.

5. The protective film according to claim 4, wherein at least one of the low refractive index layer and the high refractive index layer is doped with an anti-static component.

6. The protective film according to claim 5, wherein the high refractive index layer comprises a resin layer and metal oxide particles doped in the resin layer, a material of the resin layer of the high refractive index layer comprises an acrylate material, a polyurethane acrylate material, a silane modified acrylate material, or a silane modified polyurethane acrylate material, and a refractive index of the metal oxide particle is greater than 1.6; and
the high refractive index layer doped with the anti-static component further comprises an anti-static component doped in the resin layer of the high refractive index layer, and the anti-static component is an anti-static agent.

7. The protective film according to claim 5 or 6, wherein the high refractive index layer comprises an inorganic film layer, a material of the inorganic film layer comprises inorganic metal oxide, nitride, or oxynitride, and a refractive index of the inorganic film layer is greater than 1.6; and
the high refractive index layer doped with the anti-static component further comprises an anti-static component doped in the inorganic film layer, and the anti-static component is metal oxide.

8. The protective film according to any one of claims 5 to 7, wherein the low refractive index layer comprises a resin layer and oxide particles or fluoride particles doped in the resin layer, a material of the resin layer of the low refractive index layer comprises an acrylate material, a polyurethane acrylate material, a silane modified acrylate material, or a silane modified polyurethane acrylate material, and a refractive index of the oxide particle or the fluoride particle is less than 1.5; and
the low refractive index layer doped with the anti-static component further comprises an anti-static component doped in the resin layer of the low refractive index layer, and the anti-static component is the anti-static agent.

9. The protective film according to any one of claims 4 to 8, wherein a difference between the refractive index of the low refractive index layer and the refractive index of the high refractive index layer is greater than 0.1.

10. The protective film according to any one of claims 1 to 9, wherein the protective film further comprises a hard coating layer, the hard coating layer is located on the side that is of the base film layer and that is away from the adhesive layer, the hard coating layer comprises a resin layer, and a material of the resin layer of the hard coating layer comprises an acrylate material, a polyurethane acrylate material, a silane modified acrylate material, or a silane modified polyurethane acrylate material.

11. The protective film according to claim 10, wherein the hard coating layer further comprises an anti-static agent doped in the resin layer of the hard coating layer

12. The protective film according to any one of claims 1 to 11, wherein the protective film further comprises an anti-static layer, the anti-static layer is located between the adhesive layer and the base film layer, or the anti-static layer is located on the side that is of the base film layer and that is away from the adhesive layer, and a material of the anti-static layer comprises the anti-static agent.

13. The protective film according to any one of claims 1 to 12, wherein a material of the adhesive layer comprises acrylic adhesive, an elastic modulus of the adhesive layer is less than 40 KPa, and a glass transition temperature is less than -30°C.

14. The protective film according to any one of claims 1 to 13, wherein the protective film further comprises an anti-fingerprint layer, the anti-fingerprint layer is located on the side that is of the base film layer and that is away from the adhesive layer, and a material of the anti-fingerprint layer comprises perfluoropolyether silane, fluoroether, or fluorocarbon silane.

15. The protective film according to claim 14, wherein the protective film further comprises a base layer, the base layer is located between the anti-fingerprint layer and the base film layer, and a material of the base layer comprises organic silane or inorganic silica.

16. A protective film assembly, comprising the protective film according to any one of claims 1 to 15, a first release film, and a second release film, wherein the first release film covers an inner surface of the protective film, and the second release film covers an outer surface of the protective film.

17. A display assembly, comprising a foldable display and the protective film according to any one of claims 1 to 15, wherein an adhesive layer of the protective film is adhered to the foldable display.

18. A terminal, comprising a housing and the display assembly according to claim 17, wherein the display assembly is mounted on the housing.
